(19) Europäisches Patentamt

European Patent Office

Office européen des brevets

(11) **EP 1 576 294 B1**

(12) **EUROPÄISCHE PATENTSCHRIFT**

(45) Veröffentlichungstag und Bekanntmachung des Hinweises auf die Patenterteilung:
**09.08.2006 Patentblatt 2006/32**

(21) Anmeldenummer: 03711974.0

(22) Anmeldetag: **11.03.2003**

(51) Int Cl.:
**F15C 5/00** (2006.01)

(86) Internationale Anmeldenummer:
**PCT/EP2003/002491**

(87) Internationale Veröffentlichungsnummer:
**WO 2004/081390 (23.09.2004 Gazette 2004/39)**

(54) **NORMAL DOPPELT GESCHLOSSENES MIKROVENTIL**

MICROVALVE THAT IS DOUBLY CLOSED IN A NORMAL MANNER

MICROVANNE NORMALEMENT DOUBLEMENT FERMEE

(84) Benannte Vertragsstaaten:
**DE FR GB**

(43) Veröffentlichungstag der Anmeldung:
**21.09.2005 Patentblatt 2005/38**

(73) Patentinhaber: **Fraunhofer-Gesellschaft zur Förderung der angewandten Forschung e.V.
80636 München (DE)**

(72) Erfinder:
• **RICHTER, Martin
81677 München (DE)**
• **KRUCKOW, Jürgen
80538 München (DE)**

(74) Vertreter: **Stöckeler, Ferdinand et al
Schoppe, Zimmermann,
Stöckeler & Zinkler
Postfach 246
82043 Pullach bei München (DE)**

(56) Entgegenhaltungen:
**WO-A-02/27194          DE-A- 2 356 311
DE-A- 3 919 876          DE-A- 19 719 862**

**Beschreibung**

Die vorliegende Erfindung bezieht sich auf ein normal geschlossenes Mikroventil und insbesondere ein solches Mikroventil, das sowohl bei einem Überdruck an einem Fluideinlass desselben als auch bei einem Fluidauslass desselben selbstsperrend wirkt. Ein solches Mikroventil kann als normal doppelt geschlossenes Mikroventil bezeichnet werden. Ein solches Mikroventil soll insbesondere für den Einsatz als Einlassventil in einer Mikropumpe geeignet sein.

Aus dem Stand der Technik sind Mikropumpen mit passiven und aktiven Mikroventilen am Pumpeneinlass und Pumpenauslass bekannt.

Eine bekannte Mikropumpe mit passiven Rückschlagventilen am Pumpeneinlass und Pumpenauslass ist beispielsweise aus der DE-A-19719862 bekannt und in den Fig. 1a bis 1c hierin gezeigt. Diese Pumpe umfasst einen Pumpmembranwafer 10, in dem eine Pumpmembran 12 strukturiert ist, auf der ein Piezoaktor 14 vorgesehen ist. Ferner umfasst die Pumpe einen ersten Ventilwafer 16, in dem eine Ventilklappe und ein Ventilsitz strukturiert sind. Ferner ist ein zweiter Ventilwafer 18 vorgesehen, in dem eine zweite Ventilklappe und ein zweiter Ventilsitz strukturiert sind. Bei der erfindungsgemäßen Mikromembranpumpe sind die drei Wafer gebondet, so dass ein erstes Rückschlagventil 20 zwischen einem Einlass 22 und einer Pumpkammer 24 angeordnet ist und ein zweites Rückschlagventil 26 zwischen der Pumpkammer 24 und einem Auslass 28 angeordnet ist.

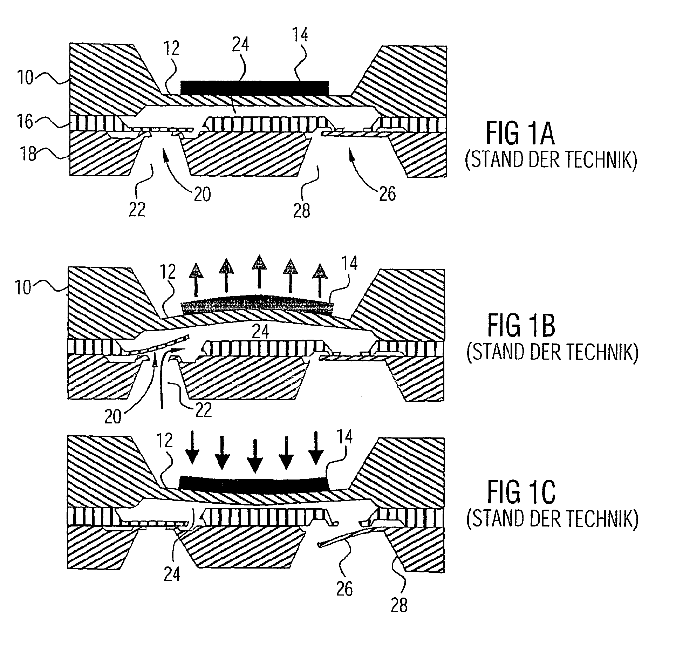

Wie in Fig. 1b gezeigt ist, zieht während eines Saughubs der Piezoaktor 14 die Membran 12 nach oben, so dass durch den sich in der Pumpkammer 24 ergebenden Unterdruck ein Fluidfluss durch das Rückschlagventil 20 vom Einlass 22 in die Pumpkammer 24 stattfindet.

Bei einem nachfolgenden Druckhub bewegt der Piezoaktor 14 die Membran 12 nach unten, so dass durch den in der Pumpkammer 24 entstehenden Überdruck ein Fluidfluss durch das Rückschlagventil 26 in den Auslass 28 stattfindet, wie in Fig. 1c gezeigt ist. Hinsichtlich der weiteren Einzelheiten einer solchen Mikropumpe mit passiven Rückschlagventilen wird auf die oben genannten DE-A-19719862 verwiesen.

Nachteilig an einer Mikropumpe mit passiven Rückschlagventilen der oben beschriebenen Art ist, dass, wenn ein Überdruck am Einlass 22 vorliegt, die Rückschlagventile 20 und 26 öffnen, so dass ein unerwünschter Fluss, ein sogenannter Free-Flow oder Freifluss, durch die Pumpe stattfinden kann.

Bei einer Vielzahl von Anwendungen ist jedoch ein solcher Freifluss unerwünscht bzw. sogar verboten. Derartige Anwendungen umfassen alle, deren Betriebsbedingungen einen Überdruck am Einlass möglich machen und bei denen trotzdem kein freier Fluss stattfinden soll. Anwendungen, bei denen ein solcher freier Fluss im stromlosen Zustand vermieden werden muß, existieren beispielsweise auf dem Gebiet der Medizintechnik oder von Brennstoffzellen.

Ein weiterer Nachteil der in den Fig. 1a bis 1c gezeigten Mikropumpe besteht darin, dass zur Realisierung dieser Mikropumpe im Schichtaufbau mindestens drei Schichten benötigt werden, nämlich die Pumpmembranschicht 10 und die beiden Ventilschichten 16 und 18.

Um einen solchen unerwünschten Freifluss zu verhindern, gab es im Stand der Technik eine Anzahl von Lösungsansätzen. Beispielsweise wurden Rückschlagventile entwickelt, die in die geschlossene Position vorgespannt sind, beispielsweise durch eine geeignete Beschichtung auf der Ventilklappe. Nachteilig hierbei ist, dass dazu aufwendige Prozesse erforderlich sind, wobei geeignete Beschichtungen schwierig zu realisieren sind, insbesondere mit den weiterfolgenden Anforderungen an einen dichten Waferverbindungsprozess. Derartige vorgespannte Rückschlagventile sind zwar normal geschlossen, öffnen aber bei einem Schwelldruck, d. h. wenn der Einlassdruck einen bestimmten Wert übersteigt, so dass durch derartige Rückschlagventile ein freier Fluss nicht zuverlässig ausgeschlossen werden kann.

Weiterhin ist es aus dem Stand der Technik bekannt, ein normal geschlossenes Mikroventil (im unbetätigten Zustand geschlossenes Mikroventil) dem Einlass einer Mikromembranpumpe mit passiven Rückschlagventilen vorzuschalten. Eine solche Lösung, wie sie hierin in Fig. 2 gezeigt ist, ist in der WO-A-02/27194 offenbart.

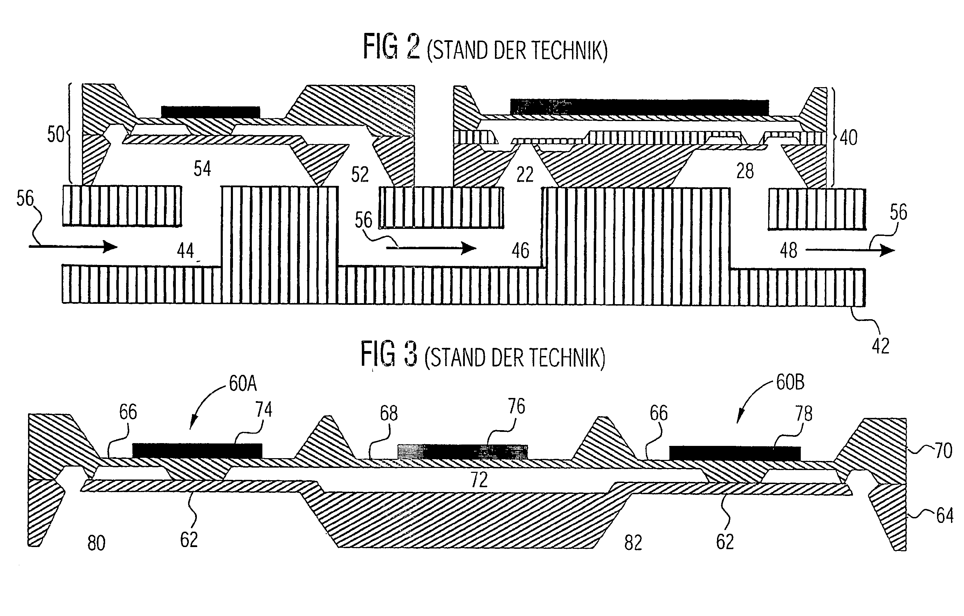

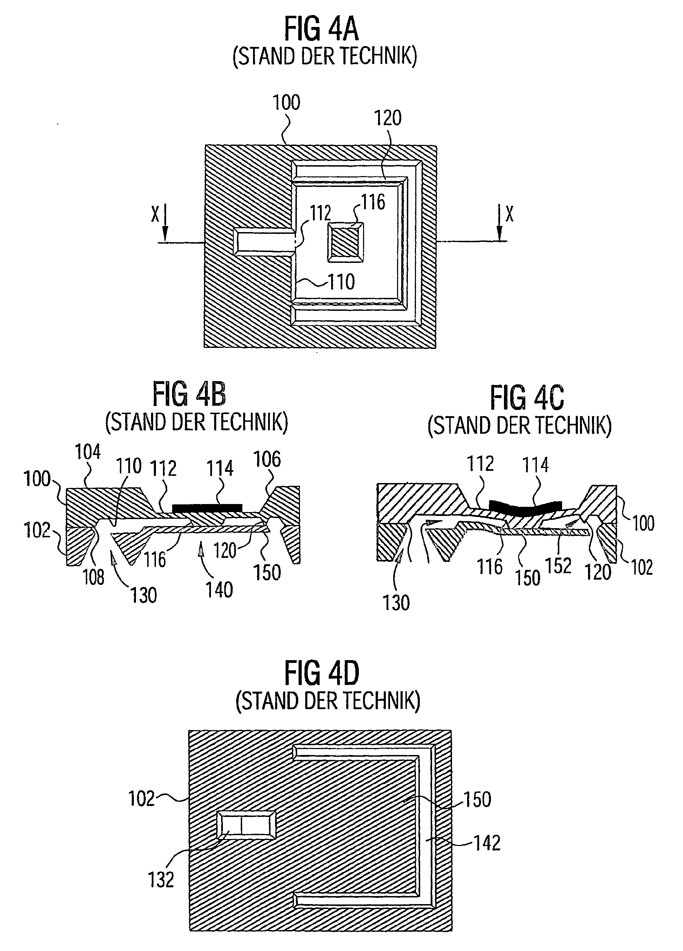

Die in Fig. 2 gezeigte Struktur umfasst eine Mikromembranpumpe 40 mit passiven Rückschlagventilen, wie sie oben Bezug nehmend auf die Fig. 1a bis 1c beschrieben ist. Ferner umfasst die dort gezeigte Struktur ein Trägersubstrat 42 mit in demselben gebildeten Fluidkanälen 44, 46 und 48. Der Fluidkanal 48 ist mit dem Auslass 28 der Mikromembranpumpe 40 fluidmäßig verbunden, während der Fluidkanal 46 mit dem Einlass 22 der Mikromembranpumpe 40 fluidmäßig verbunden ist. Die in Fig. 2 gezeigte Struktur umfasst ferner ein normal geschlossenes Mikroventil 50, dessen Auslass 52 mit dem Fluidkanal 46 und somit dem Einlass 22 der Mikromembranpumpe 40 fluidmäßig verbunden ist, und dessen Einlass 54 mit dem Fluidkanal 44 fluidmäßig verbunden ist. Die Pumprichtung ist in Fig. 2 durch Pfeile 56 gezeigt. Hinsichtlich des Aufbaus des normal geschlossenen Mikroventils 50 wird auf die Offenbarung der WO-A-02/27194 und ferner die nachfolgende Beschreibung der Fig. 4a bis 4d verwiesen.

Nachteilig an der in Fig. 2 gezeigten Lösung einer Serienschaltung zwischen einer Mikropumpe 40 mit passiven Rückschlagventilen und einem normal geschlossenen Mikroventil 50 ist das erforderliche separate Bauelement, was diese Lösung teuer und aufwendig macht.

Weiterhin sind aus dem Stand der Technik Mikroperistaltikpumpen mit integrierten aktiven, normal geöffneten Ventilen bekannt. Der Vorteil derartiger Mikroperistaltikpumpen besteht darin, dass ein aktives Schließen des Strömungspfads möglich ist. Diese Pumpen sind jedoch nachteilig dahingehend, da sie nicht stromlos sperrend sind, da die Ventile im unbetätigten Zustand offen sind. Weiterhin besitzen Peristaltikpumpen den generellen Nachteil, dass mehrere Antriebselemente benötigt werden.

Aus der oben genannten WO-A-02/27194 sind ferner Mikroperistaltikpumpen mit aktiven Ventilen am Einlass und am Auslass bekannt. Eine derartige Mikroperistaltikpumpe ist in Fig. 3 gezeigt.

Die in Fig. 3 gezeigte Mikroperistaltikpumpe umfasst zwei gegensinnig angeordnete normal geschlossene Ventile 60a und 60b. Die Ventilklappen 62 der normal geschlossenen Ventile 60a und 60b sind in einem Ventilklappenchip 64 integriert. Aktormembrane 66 der beiden Ventile 60a und 60b sowie eine Pumpmembran 68 sind in einem Membranchip 70 integriert. Die Chips 64 und 70 sind strukturiert, um zwischen denselben eine Pumpkammer 72 zu definieren. Auf den Aktormembranen 66 und der Pumpmembran 68 sind jeweils Piezoaktoren 74, 76 und 78 vorgesehen. Die Spannungen, die an die Piezoaktoren 74, 76 und 78 angelegt werden, können geeignet gesteuert werden, um eine peristaltische Pumpwirkung von dem Einlass 80 über die Pumpkammer 72 zu dem Auslass 82 zu implementieren. Hinsichtlich weiterer Einzelheiten der in Fig. 3 gezeigten peristaltischen Mikropumpe wird wiederum auf die Offenbarung der WO-A-02/27194 verwiesen.

Nachteilig an der in Fig. 3 gezeigten Mikroperistaltikpumpe ist neben dem Erfordernis mehrerer Antriebselemente, dass beim Druckhub bei großen Druckdifferenzen das Einlassventil nicht geschlossen gehalten werden kann.

Ein normal geschlossenes Mikroventil, wie es jeweils am Einlass der in den Fig. 2 und 3 gezeigten bekannten Pumpen verwendet ist, wird nachfolgend Bezug nehmend auf die Fig. 4a bis 4d näher erläutert. Ferner wird hiermit die Offenbarung der WO-A-02/27194 bezüglich des Aufbaus und der Funktionsweise eines solchen normal geschlossenen Mikroventils aufgenommen.

Fig. 4a zeigt eine Untenansicht eines Aktorchips 100 des Ventils, Fig. 4b zeigt eine Schnittansicht entlang der Linie x-x in Fig. 4a im unbetätigten Zustand, Fig. 4c zeigt eine Schnittansicht entlang der Linie x-x in Fig. 4a im betätigten Zustand, und Fig. 4d zeigt eine Draufsicht auf einen Klappenchip 102 des Ventils. Es wird darauf hingewiesen, dass die Figuren hierin Strukturen exemplarisch mit Abschrägungen zeigen, wie sie beim KOH-Ätzen von Siliziumsubstraten auftreten, wobei die gezeigten Strukturen jedoch auch auf andere Weisen ohne Abschrägungen hergestellt werden können.

Der Aktorchip 100 weist auf einer ersten Hauptseite 104 eine Absenkung bzw. Ausnehmung 106 auf, während auf einer gegenüberliegenden Hauptseite 108 eine Absenkung bzw. Ausnehmung 110 vorgesehen ist. Durch die beiden Absenkungen 106 und 110 ist eine Aktormembran 112 gebildet. Auf einer Seite der Aktormembran 112 ist eine Piezokeramik 114 vorgesehen, während auf der gegenüberliegenden Seite der Aktormembran 112 ein Stößel 116 vorsteht. In Fig. 4a sind der Stößel 116 die Absenkung 110 und mit gestrichelter Linie der Bereich der Absenkung, der die Aktormembran 112 bildet, gezeigt.

Die Aktormembran 112 und der Stößel 116 sind in lateraler Richtung im wesentlichen quadratisch gebildet und zudem in einer zentrischen Anordnung angeordnet. Ferner ist in Fig. 4a zu sehen, dass die Membran 112 entlang drei ihrer vier Seiten bzw. Kantenabschnitte von einer Dichtlippe 120 umgeben ist. Wie am besten in Fig. 4b und 4c zu sehen ist, ist die Dichtlippe 120 auf der Seite 108 des Aktorchips 100 gebildet und wird vorzugsweise gleichzeitig mit dem Stößel 116 strukturiert. Der Klappenchip 102 ist mit dem Aktorchip 100 verbunden und umfasst einen Auslassbereich 130 und einen Einlasskanalbereich 140. Der Auslassbereich 130 umfasst eine Auslassöffnung 132, die den Klappenchip 102 vollständig durchdringt, während der Eingangskanalbereich 140 eine Einlassöffnung 142 umfasst, die ebenfalls den Klappenchip 102 vollständig durchdringt. Der Einlasskanalbereich 140 ist durch eine Absenkung in der zweiten Hauptseite des Klappenchips 102 gebildet, die sich bis zu einer Verschlussklappe bzw. einer Klappmembran 150 erstreckt.

Die Verschlussklappe 150 ist, wie es in Fig. 4d gezeigt ist, in einer quadratischen Form gebildet, und ist an drei von vier ihrer Seiten bzw. Kanten über die Einlassöffnung 142 gegenüber dem Rest des Klappenchips 102 frei bewegbar, während dieselbe an der vierten Seite befestigt bzw. eingespannt ist. Die Ventilklappe 150 erstreckt sich entlang ihrer lateralen Ausdehnung etwas über die laterale Ausdehnung der Dichtlippe 120 hinaus, so dass die Einlassöffnung 142 und der Einlasskanalbereich 140 in dem normalerweise geschlossenen Zustand des Ventils seitlich durch den Klappenchip 102 und gegen den Auslassbereich 130 durch die Ventilklappe 150, die Dichtlippe 120 und einen Teil der Absenkung 110, der die Dichtlippe 120 umgibt, begrenzt ist.

Bei dem in den Fig. 4a bis 4d gezeigten normal geschlossenen Ventil ist die Verschlussklappe 150 derart angeordnet, dass die lateralen Abmessungen der Verschlussklappe 150 größer als die umlaufende Dichtlippe 120 des Aktorchips 102 sind, und dass der Einlassdruck, der durch ein zu schaltendes Fluid in dem Einlasskanalbereich 140 auf die an den Einlasskanalbereich 140 angrenzende Verschlussklappe 150 ausgeübt wird, schließend wirkt. Ohne Anlegen einer Spannung an die Piezokeramik 114 und damit ohne Druckbeaufschlagung auf die Verschlussklappe 150 ist folglich die Verschlussklappe 150 geschlossen. Zum Öffnen des Ventils wird eine in Polarisationsrichtung positive Spannung an den Silizium-Piezo-Biegewandler, der durch die Piezokeramik 114 und die Membran 112 gebildet ist, angelegt, wodurch der Silizium-Piezo-Biegewandler mit dem Stößel 116 die Verschlussklappe 150 gegen den Einlassdruck aufdrückt, siehe Fig. 4c. Genauer gesagt wird durch die an der Piezokeramik 114 in Polarisationsrichtung anliegende, positive Spannung die Membran 112 zusammen mit dem Stößel 116 in Richtung der Ventilklappe 150 bewegt, die sich aufgrund des Drucks des Stößels 116 aufbiegt und einen Spalt 152 zwischen sich und der Dichtlippe 120 bildet.

Das oben Bezug nehmend auf die Fig. 4a bis 4d beschriebene, selbstsperrende, aktive Mikroventil hat die Eigenschaft, dass es beim Anlegen eines Überdrucks am Einlass 140 sperrt. Ein Referenzdruck, der von der der Ventilklappe 150 gegenüberliegenden Seite auf die Membran 112 wirkt, bei dem es sich typischerweise um den Atmosphärendruck handelt, wirkt für das Mikroventil tendenziell öffnend. Es hat sich ferner herausgestellt, dass bei dem in der WO-A-02/27194 beschriebenen Mikroventil ein Überdruck am Auslass 130 eine tendenziell öffnende Wirkung auf das Ventil hat. Wird dieses Ventil somit als alleiniges Einlassventil einer Mikropumpe verwendet, wobei der Auslass 130 mit der Pumpkammer der Mikropumpe fluidmäßig verbunden ist, kann während einer Pumpphase, während der in der Pumpkammer ein Überdruck herrscht, ein Rückfluss durch das Einlassventil auftreten.

Die Aufgabe der vorliegenden Erfindung besteht darin, ein Mikroventil zu schaffen, das in der Lage ist, sowohl bei einem Überdruck am Auslass als auch bei einem Überdruck am Einlass selbstsperrend zu wirken.

Diese Aufgabe wird durch ein normal geschlossenes Mikroventil gemäß Anspruch 1 gelöst.

Die vorliegende Erfindung schafft ein normal geschlossenes Mikroventil mit folgenden Merkmalen:

einem Fluideinlass;

einem Fluidauslass;

einem auslenkbaren Verschlusselement, das im geschlossenen Zustand des Mikroventils auf einer Dichtlippe aufliegt, so dass der Fluideinlass von dem Fluidauslass fluidmäßig getrennt ist, und das im geöffneten Zustand des Mikroventils von der Dichtlippe beabstandet ist; und

einer auslenkbaren Haltestruktur, die mit dem Verschlusselement derart verbunden ist, dass zwischen denselben ein mit dem Fluidauslass fluidmäßig verbundener Zwischenraum existiert,

wobei eine Krafteinwirkung auf die Haltestruktur und das Verschlusselement in einer ersten Richtung öffnend wirkt und eine Krafteinwirkung auf die Haltestruktur und das Verschlusselement in einer zweiten Richtung schließend wirkt,

wobei der Fluideinlass und das Verschlusselement derart angeordnet sind, dass ein Druck am Fluideinlass eine Kraft in die zweite Richtung ausübt, und

wobei eine wirksame Fläche der Haltestruktur, die bei Anlegen eines Drucks am Fluidauslass eine Kraft in der zweiten Richtung bewirkt, die größer ist als eine wirksame Fläche des Verschlusselements, die bei Anliegen eines Drucks am Fluidauslass eine Kraft in der ersten Richtung bewirkt.

Die vorliegende Erfindung schafft ein normal geschlossenes Mikroventil, das in beiden Richtungen selbstsperrend ist, d. h. bei dem sowohl ein Druck am Einlass als auch ein Druck am Auslass eine Kraft auf Verschlusselement und Haltestruktur ausüben, die eine schließende Wirkung hat. Ob bei einem solchen Druck am Einlass bzw. Auslass das Mikroventil tatsächlich geschlossen bleibt, hängt, wie in der späteren detaillierten Beschreibung weiter erörtert wird, von allen drei beteiligten Drücken, d. h. dem Einlassdruck, dem Auslassdruck und dem Referenzdruck (in der Regel dem Atmosphärendruck) ab. Ein tatsächliches Schließen ist immer dann gegeben, wenn am Einlass bzw. am Auslass ein Überdruck gegenüber den anderen beiden Drücken herrscht.

Das erfindungsgemäße normal geschlossene Mikroventil eignet sich insbesondere zur Verwendung als passives Einlassventil bei einer Mikropumpe, wobei dann der Auslass des Mikroventils mit der Pumpkammer fluidmäßig verbunden ist und der Einlass des Mikroventils den Einlass der Mikropumpe darstellt. In einem solchen Fall sperrt das Mikroventil bei Vorliegen eines Überdrucks am Einlass der Mikropumpe und ferner bei Vorliegen eines Überdrucks in der Pumpkammer, wie er während einer Pumpphase herrscht. Das passive Mikroventil öffnet beim Anlegen eines Unterdrucks an der Auslassseite, wie er im Fall eines Saughubs in der Druckkammer herrscht.

Das erfindungsgemäße passive Mikroventil geht zunächst von einem selbstsperrenden aktiven Mikroventil, wie es in der WO-A-02/27194 beschrieben ist, aus. Dieses selbstsperrende aktive Mikroventil hat die Eigenschaft, dass es beim Anlegen eines Überdrucks am Einlass sperrt, während ein Referenzdruck, der auf die von der Ventilklappe 150 beabstandete Seite der Aktormembran 112 wirkt, tendenziell öffnend wirkt. Der Referenzdruck wird in der Regel der Atmosphärendruck sein, kann jedoch auch ein anderer Druck sein, wenn entsprechende Vorsehungen getroffen sind, so dass ein vom Atmosphärendruck unterschiedlicher Druck auf die Oberseite der Aktormembran ausgeübt wird. Wie oben ausgeführt wurde, wirkt der Einlassdruck auf die Ventilklappe tendenziell schließend, während der Auslassdruck in der zwischen der Aktormembran 112 und der Ventilklappe 150 gebildeten Ventilkammer in beiden Richtungen, also öffnend und schließend wirkt. Bei dem in der WO-A-02/27194 beschriebenen selbstsperrenden Mikroventil läuft die Dichtlippe 120 dreiseitig um die Ventilklappe 160, wobei die Dichtlippe 120 im nicht beweglichen Teil des Elements 100, das die Aktormembran 112 enthält, welche Kontakt zum Referenzdruck hat, gebildet ist. Somit ist bei diesem selbstsperrenden Mikroventil die wirksame Fläche, auf die der Auslassdruck nach unten wirkt, größer als die wirksame Fläche, auf die derselbe nach oben wirkt, also in Richtung der Membran, die Kontakt zum Referenzdruck hat. Liegt daher am Auslass 130 ein Überdruck an, etwa beim Druckhub eines Pumpzyklusses, wirkt dieser Überdruck öffnend auf den Verbund aus Aktormembran 112 und Ventilklappe 150. Liegt am Auslass 130 ein Unterdruck an, wirkt dieser schließend auf das Ventil. Es wurde somit erkannt, dass das aktive selbstsperrende Ventil der WO-A-02/27194 im stromlosen Zustand genau die umgekehrten Eigenschaften zeigt als die, die erforderlich sind, um als passives Rückschlagventil für den Einlass einer Mikromembranpumpe zu dienen.

Die Ursache für die Schließbewegung und Öffnungsbewegung des Mikroventils ist die Kraftbilanz auf den Membran-Klappenverbund. Bei dem erfindungsgemäßen Mikroventil ist die wirksame Fläche, auf die der Auslassdruck nach unten wirkt, kleiner als die wirksame Fläche, auf die derselbe nach oben wirkt. Somit hat ein Druck am Auslass stets eine Nettokraft in einer Schließrichtung zur Folge, so dass ein Druck am Auslass zum Schließen des Ventils führt, sofern nicht durch die beiden anderen Drücke, den Einlassdruck und den Referenzdruck, ein solches Schließen verhindert wird.

Vorzugsweise ist das erfindungsgemäße normal geschlossene Mikroventil als passives Mikroventil ausgebildet, bei dem kein aktives Betätigungselement für die Haltestruktur vorgesehen ist. Alternativ kann das erfindungsgemäße Mikroventil jedoch auch als ein Mikroventil mit aktiver Betätigung der Haltestruktur implementiert sein, wobei dasselbe dann immer noch die selbstsperrende Wirkung im stromlosen Zustand bei Vorliegen eines Überdrucks am Auslass aufweist.

Erfindungsgemäß ist die Haltestruktur vorzugsweise als eine versteifte oder nicht versteifte, umlaufend eingespannte Membranstruktur in einem ersten Schichtelement ausgebildet. Vorzugsweise ist das auslenkbare Verschlusselement als eine einseitig oder zweiseitig eingespannte, versteifte oder nicht versteifte Membranstruktur in einem zweiten Schichtelement ausgebildet. Die auslenkbare Haltestruktur und das auslenkbare Verschlusselement sind vorzugsweise über ein stößelartiges Verbindungsstück fest miteinander verbunden, das einen zentralen Bereich der Haltestruktur mit einem zentralen Bereich des Verschlusselements verbindet, um auftretende Drehmomentkräfte möglichst gering zu halten.

Neben dem Verschlusselement und der Haltestruktur sind ferner die übrigen Elemente des erfindungsgemäßen Mikroventils vorzugsweise ebenfalls in dem ersten und/oder zweiten Schichtelement strukturiert.

Bei einem bevorzugten Ausführungsbeispiel ist das Verschlusselement eine zweiseitig eingespannte, versteifte Membranstruktur, wobei das Mikroventil einen Fluideinlass an jeder nicht eingespannten Seite des Verschlusselements aufweist. Vorzugsweise ist eine Auslassöffnung an jeder eingespannten Seite des Verschlusselements vorgesehen.

Die vorliegende Erfindung schafft ferner eine Mikropumpe, bei der ein erfindungsgemäßes Mikroventil als Einlassventil verwendet ist. Eine derartige Mikropumpe kann ebenfalls unter Verwendung lediglich zweier strukturierter Schichten implementiert werden, wobei der Fluidauslass des Mikroventils dann durch eine entsprechende Strukturierung der beiden Schichten direkt mit der Pumpkammer der Mikropumpe verbunden ist. Das Auslassventil einer derartigen Mikropumpe kann durch ein beliebiges herkömmliches Rückschlagventil realisiert sein.

Eine derartige erfindungsgemäße Mikropumpe weist zahlreiche Vorteile auf. Da das Mikroventil im stromlosen Zustand in beiden Richtungen selbstsperrend wirkt, erlaubt die Mikropumpe keinen unerwünschten Freifluss durch dieselbe. Zum Aufbau einer solchen Mikropumpe sind, wie oben erwähnt, nur zwei Schichten notwendig, so dass nur ein Fügeschritt erforderlich ist. Ferner zeigt die erfindungsgemäße Mikropumpe keine großen Ventilsümpfe, so dass ein großes Kompressionsverhältnis erreichbar ist. Sämtliche Funktionen der erfindungsgemäßen Mikropumpe sind durch nur ein Aktorelement erreichbar. Somit ist die Mikropumpe stromsparend, was insbesondere für energiekritische Anwendungen, wie z. B. implantierbare Mikropumpen, bedeutsam ist.

Bevorzugte Ausführungsbeispiele der vorliegenden Erfindung werden nachfolgend Bezug nehmend auf die beiliegenden Zeichnungen näher erläutert. Es zeigen:

Fig. 1a     bis 1c schematische Querschnittansichten einer bekannten Mikromembranpumpe mit passiven Rückschlagventilen;

Fig. 2     eine schematische Querschnittansicht einer bekannten Mikromembranpumpe mit zusätzlichem aktivem Einlassventil;

Fig. 3     eine schematische Querschnittansicht einer bekannten Mikroperistaltikpumpe;

Fig. 4a     bis 4d schematische Ansichten zur Erläuterung eines bekannten Mikroventils;

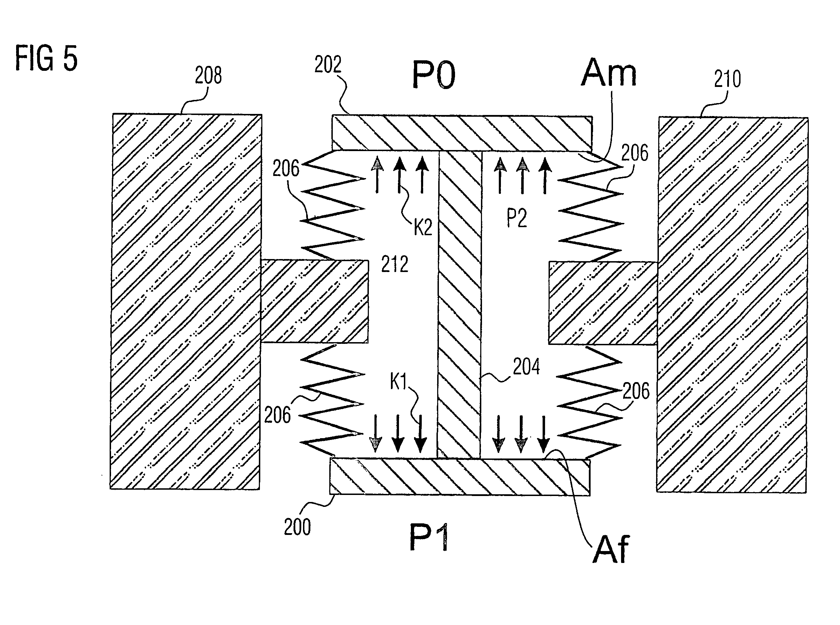

Fig. 5     eine schematische Darstellung zur Erläuterung der Kräfteverhältnisse eines erfindungsgemäßen Mikroventils;

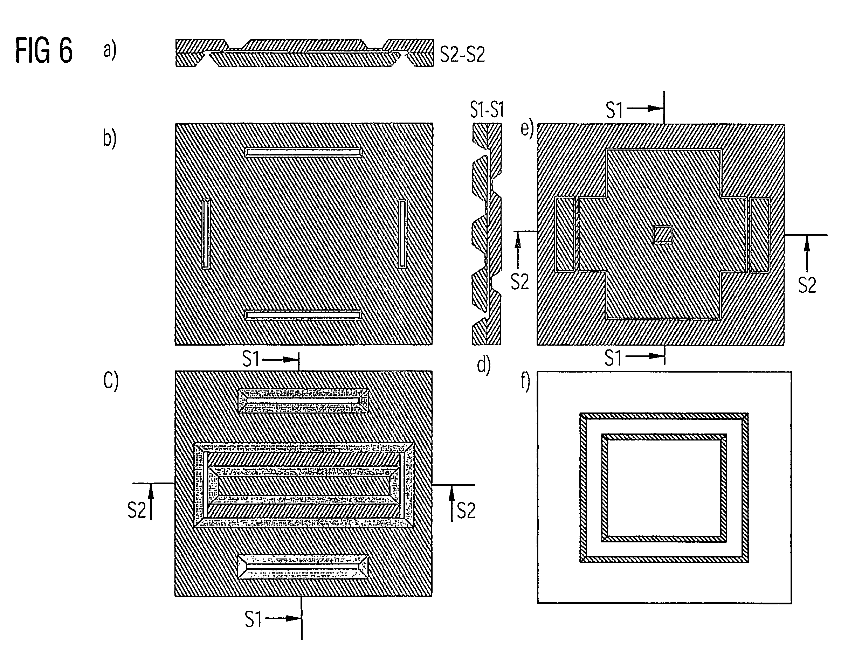

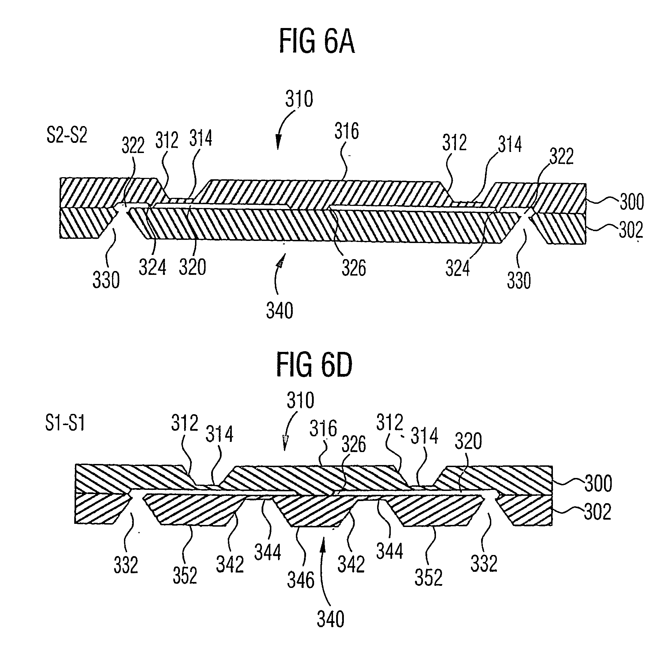

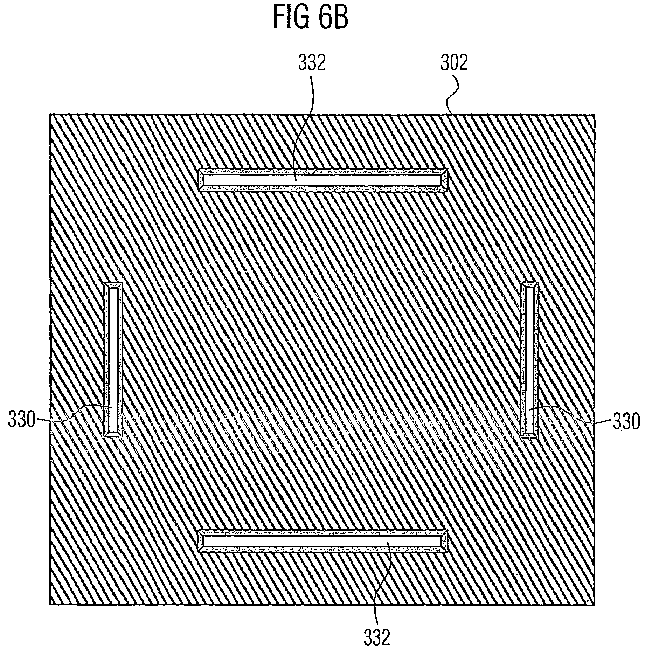

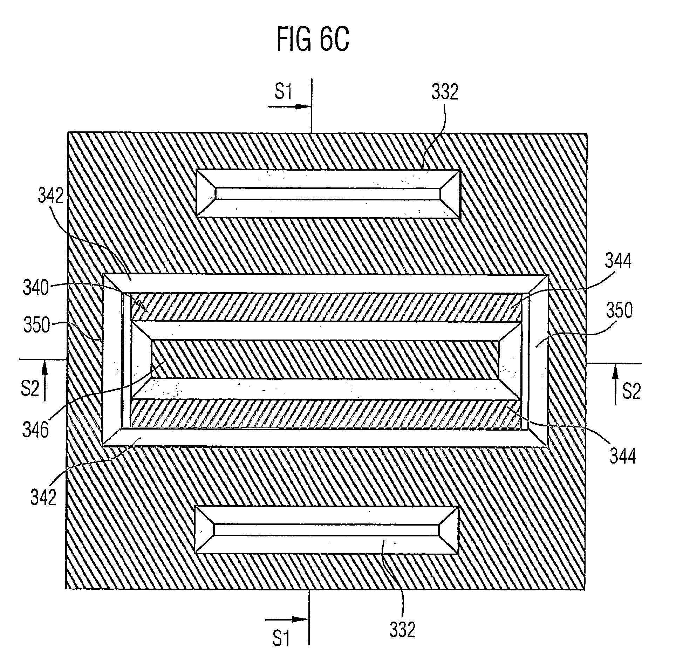

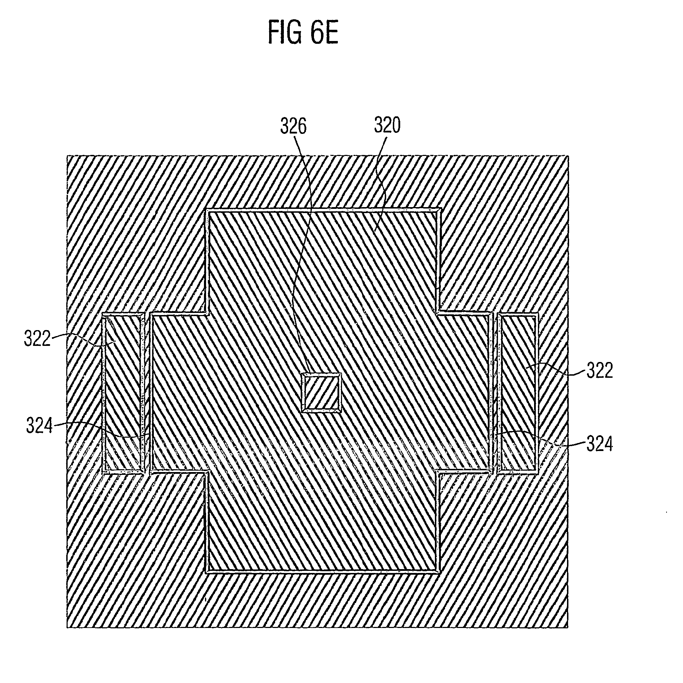

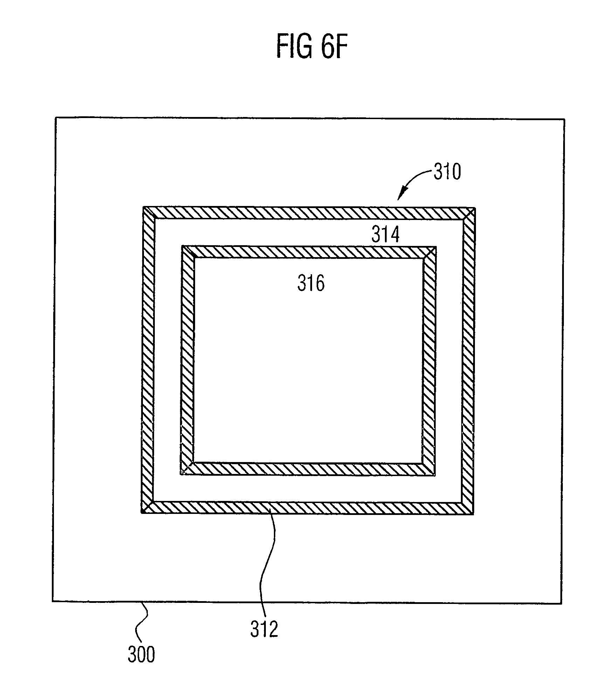

Fig. 6      eine Zusammenstellung der Fig. 6a bis 6f, die schematische Ansichten eines bevorzugten Ausführungsbeispiels eines erfindungsgemäßen Mikroventils zeigen;

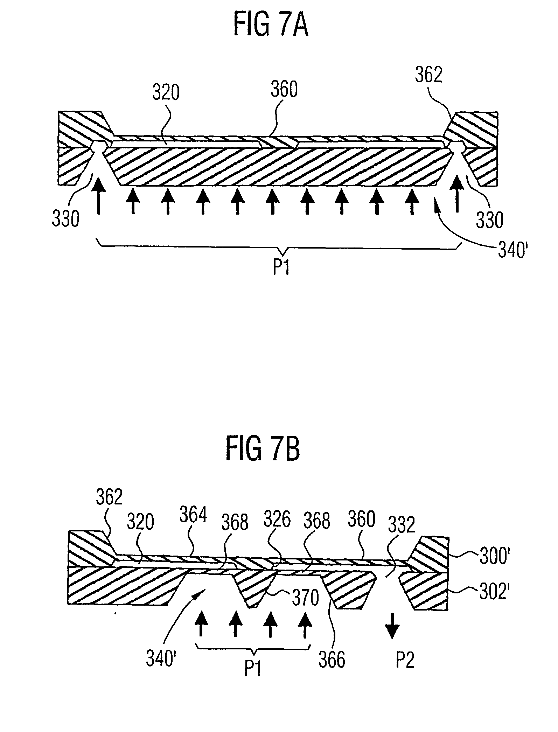

Fig. 7a      und 7b schematische Querschnittansichten eines weiteren Ausführungsbeispiels eines erfindungsgemäßen Mikroventils;

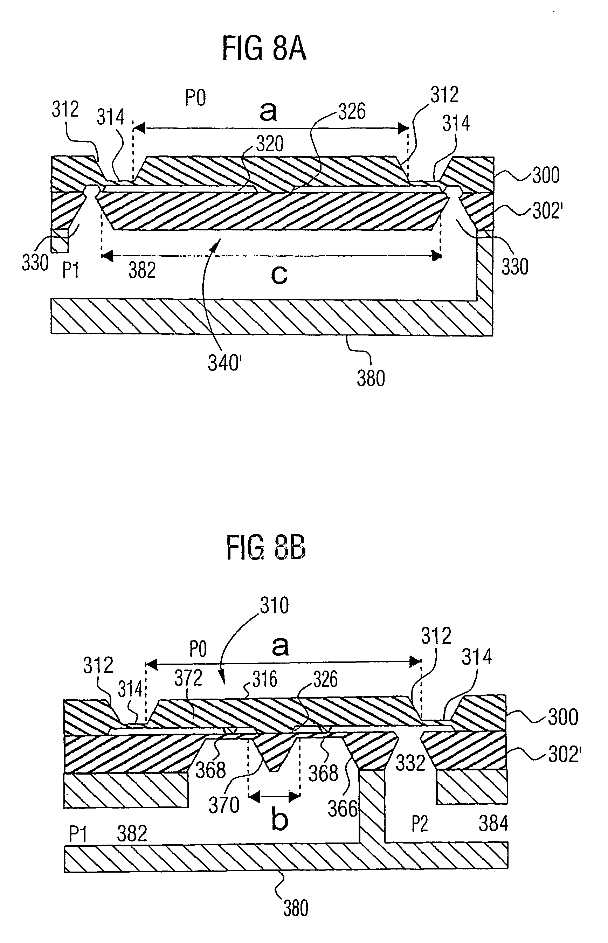

Fig. 8a      und 8b schematische Querschnittansichten eines weiteren Ausführungsbeispiels eines erfindungsgemäßen Mikroventils;

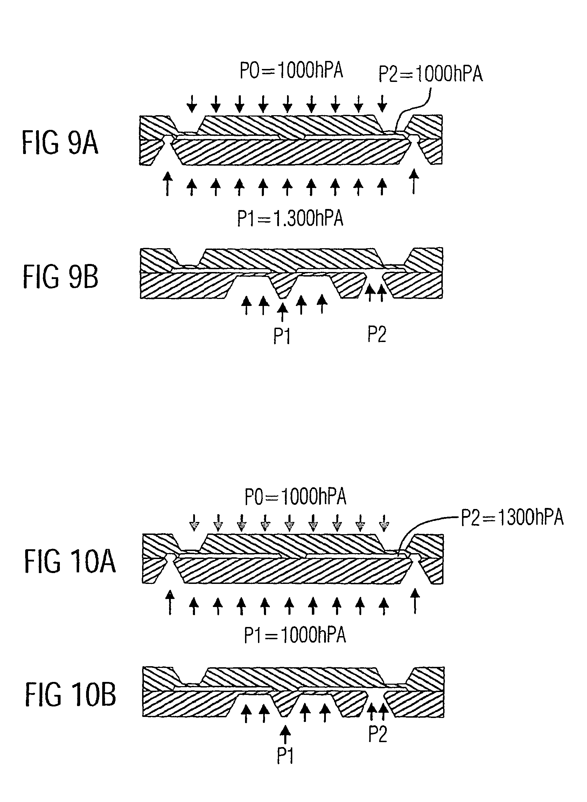

Fig. 9a,      9b, 10a, 10b, 11a und 11b schematische Querschnittansichten zur Erläuterung der Funktionsweise eines erfindungsgemäßen Mikroventils; und

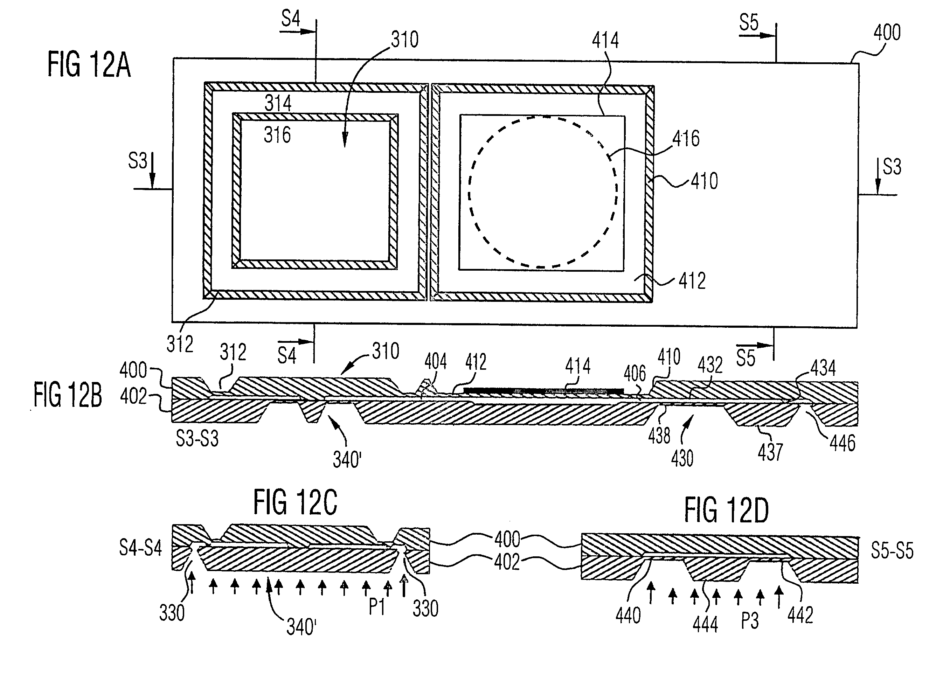

Fig. 12a      bis 12e schematische Ansichten einer erfindungsgemäßen Mikropumpe.

Bevor auf bevorzugte Ausführungsbeispiele der vorliegenden Erfindung näher eingegangen wird, wird zunächst auf Fig. 5 Bezug genommen, um die abhängig von einem Auslassdruck auf den Verbund aus Haltestruktur und Verschlusselement wirkenden Kräfte zu erläutern. Wie in Fig. 5 gezeigt ist, stellen bei dem erfindungsgemäßen Mikroventil und dem Ventil gemäß der WO-A-02/27194 ein Verschlusselement 200, eine Haltestruktur 202 und ein Verbindungsstück 204 eine I-Struktur dar. Diese I-Struktur ist federnd, wie in Fig. 5 durch die Federn 206 schematisch angezeigt ist, an den stationären Bereichen des Aktorchips 100 und des Klappenchips 102 (siehe Fig. 4b und 4c) angebracht, die in Fig. 5 mit den Bezugszeichen 208 und 210 versehen sind. Die federnde Lagerung ergibt sich beispielsweise durch Membranstrukturen, die jeweilige versteifte Bereiche der beweglichen Strukturen mit den stationären Bereichen verbinden. Der somit erzeugte Innenbereich 212 steht mit dem Fluidauslass in Fluidverbindung, so dass in demselben ein am Fluidauslass herrschender Druck P2 vorliegt.

Auf die auslenkbare Haltestruktur 202 wirkt von der dem Innenbereich gegenüberliegenden Seite ein Referenzdruck P0, in der Regel der atmosphärische Druck. Auf das auslenkbare Verschlusselement 200 wirkt von der dem Innenbereich gegenüberliegenden Seite der Einlassdruck P1. Die auslenkbare Haltestruktur 202 besitzt eine wirksame Fläche Am, auf die der Druck P2 wirkt. Das auslenkbare Verschlusselement 200 besitzt eine wirksame Fläche $A_f$, auf die der Druck P2 wirkt.

Der der vorliegenden Erfindung zugrunde liegende Lösungsgedanke besteht nun darin, den Klappen-Membranverbund, der in Fig. 5 schematisch als I-Struktur gezeigt ist, so zu gestalten, dass bei einem Überdruck am Auslass das Ventil schließt und bei einem Unterdruck am Auslass das Ventil öffnet. Darüber hinaus soll das Ventil bei einem Überdruck am Einlass selbstsperrend bleiben.

Es sei angemerkt, dass bei den Betrachtungen hierin davon ausgegangen wird, dass die Bewegungsrichtung der I-Struktur (aufwärts oder abwärts) nicht durch die jeweiligen Aufhängungen der Haltestruktur und des Verschlusselements beeinflusst wird, sondern lediglich durch die Nettokraft beeinflusst wird. Unter der Annahme, dass die Flächen, auf die P1 von außen und auf die P2 von innen auf das Verschlusselement 200 wirkt, gleich sind, und dass die Flächen, auf die P0 von außen und P2 von innen auf die Haltestruktur 202 wirkt, gleich groß sind (Vernachlässigung der durch das Verbindungsstück 204 besetzten Fläche im Innenbereich), kann diese Nettokraft wie folgt berechnet werden:

$$F_{net} = Am \cdot (P2-P0) - A_f \cdot (P2-P1)$$

Um eine selbstsperrende Wirkung zu erhalten, wird eine Nettokraft $F_{net} \geq 0$ benötigt. Eine solche Nettokraft wird durch das erfindungsgemäße Flächenverhältnis bewirkt.

Es wurde herausgefunden, dass die obigen Forderungen erfüllt werden können, wenn die wirksame Fläche Am der Haltestruktur 202 größer gemacht wird als die wirksame Fläche Af des Verschlusselements 200. In einem solchen Fall ist die durch den Auslassdruck P2 auf das Verschlusselement 200 ausgeübte Kraft K1 geringer als die auf die Haltestruktur 202 ausgeübte Kraft K2, so dass sich eine Nettokraft nach oben, die eine schließende Wirkung hat, ergibt.

Um das gewünschte Flächenverhältnis zu erreichen, sind verschiedene Möglichkeiten denkbar. Beispielsweise könnte eine einseitig eingespannte Ventilklappe an der Einspannstelle verkürzt werden, um eine geringere wirksame Fläche der Ventilklappe verglichen mit der Haltemembran zu realisieren. Dies könnte implementiert werden, indem bei dem in Fig. 4b gezeigten Mikroventil (wobei erfindungsgemäß der Piezoaktor 114 in der Regel nicht vorgesehen sein wird) den rechts an den Auslass 130 angrenzenden feststehenden Bereich des Klappenchips 102 verlängert, so dass die Länge der Ventilklappe kürzer wird. Nachteilig an dieser Lösung ist jedoch, dass dadurch eine Unsymmetrie bezüglich des Angriffspunkts des Stößels 116 und daraus resultierende Drehmomentkräfte entstehen würden.

Eine bevorzugte Lösung zur Erreichung des obigen Flächenverhältnisses besteht daher darin, eine zweiseitig eingespannten Ventilklappe zu verwenden und diese an beiden eingespannten Seiten zu verkürzen.

Bezug nehmend auf die Fig. 6 und 6a bis 6f wird nun ein bevorzugtes Ausführungsbeispiel eines erfindungsgemäßen Mikroventils näher erläutert. Fig. 6 zeigt dabei eine Zusammenstellung der in den Fig. 6a bis 6f gezeigten Teilansichten.

Das dargestellte Mikroventil umfasst einen zweischichtigen Aufbau mit einer Membranschicht. 300 und einer Klappenschicht 302. Die beiden Schichten 300 und 302 können beispielsweise durch beidseitig strukturierte Siliziumwafer gebildet sein, die nach dem Strukturieren derselben gebondet werden (Fusion Bond). Es ist jedoch klar, dass die beiden Schichten nicht aus Silizium bestehen müssen, sondern alternativ aus Kunststoff bestehen können und durch Heißprägen oder Spritzguss strukturiert werden können. Die Kunststoffschichten können dann mittels Kleben durch Klebstoff, mittels Anlösen mit Lösemitteln und Verkleben, mittels Laserschweißen oder mittels Ultraschallschweißen verbunden werden. Wiederum alternativ können die beiden Schichten aus Metall bestehen, durch Prägen, Stanzen, Fräsen und dergleichen strukturiert werden und nachfolgend durch Kleben oder Schweißen verbunden werden. Alternativ können Kombinationen der oben angegebenen Materialien für die Membranschicht 300 und die Klappenschicht 302 verwendet werden.

Bei den nachfolgend beschriebenen bevorzugten Ausführungsbeispielen sind die Membranschicht und die Klappenschicht jeweils aus Siliziumwafern gebildet, wobei dieselben der Einfachheit halber als Membranchip 300 und Klappenchip 302 bezeichnet werden. Ferner sind die in den Fig. gezeigten schrägen Kanten typisch für ein KOH-Ätzen in Silizium, wobei diese abgeschrägten Kanten jedoch nicht notwendig für die Erfindung sind und bei alternativen Technologien nicht auftreten.

Fig. 6a zeigt eine Schnittansicht entlang der Linie S2-S2 von Fig. 6c. Fig. 6b zeigt eine Draufsicht auf den Klappenchip 302. Fig. 6c zeigt eine Untenansicht des Klappenchips 302. Fig. 6d zeigt eine Schnittansicht entlang der Linie S1-S1 in Fig. 6c. Fig. 6e zeigt eine Untenansicht des Membranchips 300, und Fig. 6f zeigt eine Draufsicht des Membranchips 300.

In dem Membranchip 300 ist eine auslenkbare Haltestruktur 310 in der Form einer versteiften Membranstruktur strukturiert. Dazu ist in die Oberseite des Membranchips 300 eine umlaufende Ausnehmung 312 strukturiert, wie am besten in den Fig. 6a und 6f zu sehen ist. Die umlaufende Ausnehmung 312 definiert Membranbereiche 314 und einen versteiften Bereich 316 der Membranstruktur 310. Obwohl die Membranstruktur 310 und der Versteifungsbereich 316 in Fig. 6f im wesentlichen rechteckig dargestellt sind, können diese Bereiche in alternativen Ausführungsbeispielen andere Formen aufweisen. Beispielsweise könnten die jeweiligen Ecken abgerundet sein, um dort auftretende Spannungen zu reduzieren.

In der Unterseite des Membranchips 300 ist eine Ventilkammerausnehmung 320 (siehe Fig. 6e), die zusammen mit der Ausnehmung 312 die Dicke der Membranbereiche 314 festlegt, strukturiert. Ferner sind in der Unterseite des Membranchips 300 Einlassbereichausnehmungen 322 strukturiert, die durch jeweilige Dichtlippen 324 von der Ventilkammerausnehmung 320 getrennt sind. Im wesentlichen zentrisch hinsichtlich des Versteifungsbereichs 316 der Membranstruktur 310 ist ein Stößel 326 in die Unterseite des Membranchips 300 strukturiert, der als Verbindungsstück zur festen Verbindung mit einem auslenkbaren Verschlusselement dient. Die Form der in der Unterseite des Membranchips 300 strukturierten Ausnehmungen hängt, wie im nachfolgenden klar wird, von der Anordnung von Einlassöffnungen und Auslassöffnungen in dem Klappenchip 302 ab, wobei die in Fig. 6e zu erkennende Form lediglich beispielhafter Natur ist.

In Fig. 6b, die eine Draufsicht auf den Klappenchip 302 darstellt, sind zwei Einlassöffnungen 330 und zwei Auslassöffnungen 332 zu sehen, die den Klappenchip 302 durchdringend gebildet sind. Wie am besten in Fig. 6a und Fig. 6d zu sehen ist, sind die Einlassöffnungen 330 bzw. Auslassöffnungen 332 jeweils durch ein kurzes Ätzen der Oberseite des Klappenchips 302 und durch ein längeres Ätzen von Ausnehmungen in der Unterseite des Klappenchips 302 gebildet.

Die Einlassöffnungen 330 sind derart in dem Klappenchip 302 gebildet, dass dieselben unterhalb der Einlassbereichausnehmungen 322 in dem Membranchip angeordnet sind, wie in Fig. 6a zu sehen ist. Die Auslassöffnungen 332 sind derart in dem Klappenchip 302 vorgesehen, dass dieselben unterhalb der Ventilkammerausnehmung 320 angeordnet und mit derselben in fluidmäßiger Verbindung sind.

Fig. 6c zeigt eine Untenansicht des Klappenchips 302 mit den darin gebildeten Auslassöffnungen 332. Ferner ist in der Unterseite des Klappenchips 302 ein auslenkbares Verschlusselement 340 als eine versteifte Membranstruktur strukturiert. Hierzu sind zwei längliche Ausnehmungen 342 gebildet, um membranartige Trägerstrukturen 344 zu implementieren. Ferner ergibt sich dadurch ein Verstärkungsbereich 346, der durch die membranartigen Trägerstrukturen 344 an dem Klappenchip 302 zweiseitig eingespannt ist. An den jeweils kurzen Seiten des Verschlusselements 340 sind den Klappenchip 302 vollständig durchdringende Ausnehmungen 350 vorgesehen, so dass das Verschlusselement 340 an den beiden kurzen Seiten nicht eingespannt ist.

Wie in Fig. 6d zu sehen ist, reichen die unbeweglichen Bereiche 352 des Klappenchips 302 auf beiden Seiten des Verschlusselements 340, das durch die Trägermembrane 344 und den Versteifungsbereich 346 gebildet ist, deutlich unter die in dem Membranchip 300 gebildete Haltestruktur 310. Dadurch ist die hinsichtlich eines Drucks in dem Zwischenraum zwischen Membranchip 300 und Klappenchip 302 wirksame Fläche des Verschlusselements 340 kleiner als die entsprechende Fläche des Membranchips 300. Somit ist bei dem in den Fig. 6a bis 6f gezeigten Mikroventil die oben angegebene Bedingung für ein in beide Richtungen selbstsperrendes Mikroventil erfüllt.

Das in den Fig. 6 bis 6f gezeigte Mikroventil ist passiv, wobei sein Öffnungszustand lediglich von den anliegenden Drücken abhängt. Der Stößel 326 ist fest mit dem Versteifungselement verbunden, wobei der Stößel bezüglich der Haltestruktur 310 und des Verschlusselements 340 vorzugsweise zentrisch angeordnet ist, um Drehmomentkräfte möglichst gering zu halten. Dagegen sind die Dichtlippen 324 nicht mit dem Verschlusselement 340 verbunden. Eine sich während der Herstellung beim Verbinden des Membranchips 300 mit dem Klappenchip 302 mögliche ergebende Verbindung zwischen Dichtlippe und Verschlusselement kann nachfolgend durch Ätzen von der Unterseite her wieder gelöst werden.

Dabei werden der Membranchip und der Klappenchip vorzugsweise über eine Oxidschicht gebondet, die durch Oxidieren der zu verbindenden Oberfläche des Membranchips und/oder der zu verbindenden Oberfläche des Klappenchips erzeugt wird. Eine Gesamtverbindungsschicht aus Oxid kann dann eine Dicke zwischen 100 nm und 300 nm aufweisen. In einem nachfolgenden Ätzschritt unter Verwendung von Flusssäure wird dann das Oxid unter der oder den Dichtlippen 324 entfernt, um dieselben von dem Klappenchip zu lösen. Da der Stößel 326 größere laterale Abmessungen aufweist als die Dichtlippen, wird er bei diesem Ätzschritt nicht von dem Klappenchip gelöst, sondern bleibt fest mit demselben verbunden. Sind zwischen Membranchip und Klappenchip ferner Stützelemente vorgesehen, wie später bezugnehmend auf Fig. 8b beschrieben wird, so müssen diese derart ausgebildet sein, dass sie auch bei dem obigen Ätzschritt von dem jeweiligen Fügepartner gelöst werden.

In den Fig. 6a bis 6f ist das erfindungsgemäße Mikroventil im drucklosen Zustand dargestellt. In diesem Zustand liegt das Verschlusselement 340 auf den Dichtlippen 324 auf, so dass die Fluidauslässe 332 von den Fluideinlässen 330 fluidmäßig getrennt sind.

Im Betrieb wirkt auf den Fluideinlass 330 ein Einlassdruck P1, während auf den Fluidauslass 332 ein Auslassdruck P2 wirkt. Ferner wirkt von oben auf die Haltestruktur ein Referenzdruck P0, bei dem es sich in der Regel um den atmosphärischen Druck handelt. Ferner wird, wie später Bezug nehmend auf die Fig. 8a und 8b näher erläutert wird, das Mikroventil derart auf einer mit Fluidleitungen versehenen Trägerstruktur angebracht, dass der Einlassdruck P1 von unten auf das Verschlusselement 340 wirkt. Da der Einlassdruck von unten auf das Verschlusselement 340 wirkt, wirkt das Mikroventil bei einem Überdruck am Einlass selbstsperrend. Da, wie oben erläutert wurde, die wirksame Fläche des Verschlusselements für einen Überdruck am Ventilauslass kleiner ist als die wirksame Fläche des Halteelements, bewirkt ein Überdruck am Ventilauslass eine resultierende Gesamtkraft auf den Verbund aus Verschlusselement und Haltestruktur, wobei diese resultierende Gesamtkraft schließend dahingehend wirkt, dass das Verschlusselement auf die Dichtlippe gedrückt wird, so dass die Ventilkammerausnehmung 320 von den Einlassbereichsausnehmungen 322 fluidisch getrennt sind. Somit existiert keine Fluidverbindung zwischen Fluideinlass und Fluidauslass.

Für den Fall eines Unterdrucks am Fluidauslass ergibt sich eine auf den Verbund aus Verschlusselement und Haltestruktur wirkende Nettokraft nach unten, so dass das Verschlusselement an beiden Enden desselben von der jeweiligen Dichtlippe 324 abhebt, so dass das Ventil im geöffneten Zustand ist. Dieses Öffnen erfolgt in analoger Weise zu dem oben Bezug nehmend auf Fig. 4c beschriebenen Öffnen des bekannten Mikroventils, mit der Ausnahme, dass erfindungsgemäß kein Betätigungselement erforderlich ist, sondern das Öffnen lediglich durch einen Unterdruck am Auslassende bewirkt werden kann.

Hinsichtlich einer genaueren Betrachtungsweise unter Einschluss der beteiligten Drücke wird auf die nachfolgenden Erörterung bezüglich der Fig. 8a bis 11b verwiesen.

In den Fig. 7a und 7b sind schematische Querschnittansichten eines ersten alternativen Ausführungsbeispiels eines erfindungsgemäßen Mikroventils gezeigt, die sich dadurch von dem in den Fig. 6a und 6b gezeigten Ausführungsbeispiel unterscheiden, dass die Haltestruktur durch eine nicht versteiftes Membranelement 360 gebildet ist und dass lediglich eine Auslassöffnung 332 in dem Klappenchip 302' vorgesehen ist. Um die nicht versteifte Membranstruktur zu realisieren, ist in dem Membranchip 300' eine flächige Ausnehmung 362 gebildet, die zusammen mit einer in der Unterseite des Membranchips 300' gebildeten Ventilkammerausnehmung 320 eine Membran 364 definiert, auf deren Unterseite wiederum ein Stößel 326, der mit einem Verschlusselement 340' verbunden ist, gebildet ist. Das Verschlusselement 340' ist wiederum durch entsprechende Ausnehmungen 366 in der Unterseite des Klappenchips 302' strukturiert, um vergleichbar mit dem Bezug nehmend auf die Fig. 6a bis 6f beschriebenen Ausführungsbeispiel membranartige Trägerstrukturen 368 für einen Versteifungsbereich 370 zu bilden.

Bei dem in Fig. 7a und 7b gezeigten Ausführungsbeispiel ist der Versteifungsbereich 370 schmaler und sind die membranartigen Trägerstrukturen 368 breiter als bei dem Bezug nehmend auf die Fig. 6a bis 6f beschriebenen Ausführungsbeispiele, so dass die wirksame Fläche des Verschlusselements 340' weiter reduziert ist.

Die ganzflächige Flexibilität der Haltestruktur des Bezug nehmend auf die Fig. 7a und 7b beschriebenen Ausführungsbeispiels reduziert jedoch die wirksame Fläche der Haltestruktur gegenüber einem in der Ventilkammer herrschenden Druck. Daher ist es, wie oben bereits Bezug nehmend auf die Fig. 6a bis 6f erläutert wurde, vorteilhaft, sowohl die zweiseitig eingespannte Klappe als auch die Membran der Haltestruktur in der Mitte zu versteifen, um eine optimale Kraftwirkung zu erzielen.

Ein Ausführungsbeispiel der vorliegenden Erfindung bei dem sowohl Klappe als auch Haltestruktur als versteifte Membran ausgebildet sind, und das nur eine Auslassöffnung aufweist, ist in den Fig. 8a und 8b gezeigt. Dieses Ausführungsbeispiel unterscheidet sich von dem in den Fig. 7a und 7b gezeigten Ausführungsbeispiel lediglich dadurch, dass die Membran der Haltestruktur versteift ist. Der Membranchip des in den Fig. 8a und 8b gezeigten Ausführungsbeispiels kann daher im wesentlichen dem des Bezug nehmend auf die Fig. 6a bis 6f beschriebenen Ausführungsbeispiels entsprechen, wobei für gleiche Elemente gleiche Bezugszeichen verwendet sind. Dagegen entspricht der Klappenchip im wesentlichen dem des in den Fig. 7a und 7b gezeigten Ausführungsbeispiels, wobei ebenfalls wiederum gleiche Bezugszeichen für gleiche Elemente verwendet sind.

Darüber hinaus ist in den Fig. 8a und 8b eine Trägerstruktur 380 gezeigt, die einen Einlassfluidkanal 382 und einen Auslassfluidkanal 384 aufweist. Über den Einlassfluidkanal 382 liegt ein Einlassdruck P1 an den Fluideinlässen 330 an, während über den Fluidauslasskanal 384 ein Auslassdruck P2 an dem Fluidauslass 332 anliegt. Das Trägerelement 380 kann in üblicher Weise durch eine Fluidikplatte mit entsprechenden Leitungen gebildet sein.

Ferner sind in den Fig. 8a und 8b die zur Ermittlung der wirksamen Fläche der jeweiligen Elemente benötigten Abmessungen angegeben, wobei von einer im wesentlichen quadratischen Haltestruktur 310 mit einer Kantenlänge a und einem Verschlusselement mit einer Länge c und einer Breite b ausgegangen wird. Bei dem versteiften membranartigen Strukturen können die versteiften Regionen 316 bzw. 370 effektiv zu den wirksamen Flächen gerechnet werden, die sich wie folgt berechnen:

$$Af = b \cdot c;$$

und

$$Am = a \cdot a.$$

Dabei ist Af die wirksame Fläche des Verschlusselements und Am die wirksame Fläche der Haltestruktur.

Bei den obigen Definitionen der wirksamen Flächen Af und Am wurde auf die Längen a und b zurückgegriffen. Eine genaue FEM-Analyse zeigt, dass die effektiven Längen von a und b etwas länger als in der Abbildung skizziert sind, da die wirksame Kraft zum Teil auch auf den gedünnten Aufhängungen der Haltestruktur und der Klappenstruktur wirkt.

Der Einfluss der Membranbereiche auf Af und Am ist umso geringer, je flexibler die Membranbereiche sind. Der Flexibilität der Membranbereiche sind jedoch Grenzen gesetzt, da in allen Betriebszuständen des Mikroventils die Bruchspannung des Membranmaterials nicht überschritten werden darf.

Wie oben ausgeführt wurde, sind die erfindungsgemäßen Mikroventile derart ausgeführt, dass die wirksame Fläche Am großer als die wirksame Fläche Af ist.

Abweichend von den obigen Ausführungsbeispielen könnte das Verschlusselement auch als Membran ohne Versteifung ausgeführt sein. Jedoch ist eine teilweise Versteifung der Klappe, d. h. des Verschlusselements, vorteilhaft dahingehend, dass Leckraten durch Verformung der Klappenränder vermieden bzw. reduziert werden.

Bezug nehmend auf die Figuren 9a bis 11b wird nun das doppelt selbstsperrende Verhalten des in den Fig. 8a und 8b gezeigten Ventils beschrieben. Dabei zeigen die Fig. 9a und 9b einen Fall eines Überdrucks am Einlass. Der Referenzdruck P0 entspreche dem atmosphärischen Druck, wobei im folgenden als Näherung angenommen wird, dass der atmosphärische Druck 1000 hPa betrage. Der Einlassdruck P1 betrage 1300 hPa und der Auslassdruck entspreche ebenfalls dem atmosphärischen Druck. Somit liegt ein Überdruck am Einlass vor, der das Verschlusselement auf die Dichtlippen drückt, so dass das Ventil in dieser Situation eine selbstsperrende Funktion zeigt.

In Fig. 10a und 10b ist eine Situation gezeigt, bei der ein Überdruck am Auslass herrscht. Der Referenzdruck betrage wiederum 1000 hPa (absolut), während auch am Einlass ein Druck von 1000 hPa vorliege. Am Auslass liege ein Druck P2 von 1300 hPa vor. Da die für den Auslassdruck P2 wirksame Fläche der Haltestruktur größer ist als die des Verschlusselements führt dieser Überdruck am Auslass ebenfalls zu einer selbstsperrenden Funktion, diesmal in Rückwärtsrichtung. Es sei angemerkt, dass es möglich ist, dass in dieser Situation geringe Leckraten auftreten können, da sich die Aufhängungen des Klappenverbundes aufgrund des Überdrucks in der Pumpkammer aufwölben können, so dass im Bereich der Aufhängungen kleine Leckpassagen zwischen Aufhängungsbereich und Dichtlippe entstehen können. Die in den Fig. 10a und 10b dargestellte Situation entspricht den Verhältnissen beim Druckhub einer Pumpe, wenn der Auslass fluidmäßig mit der Pumpkammer einer Pumpe verbunden ist.

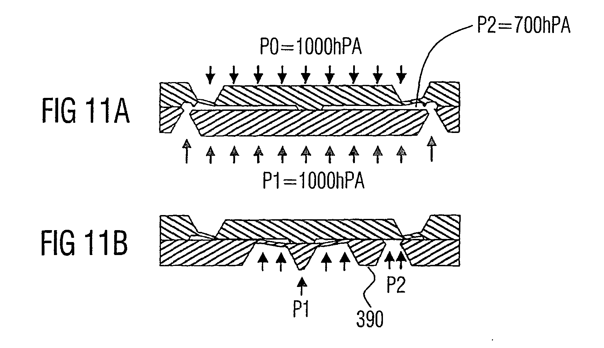

Schließlich zeigen die Fig. 11a und 11b die Situation beim Vorliegen eines Unterdrucks am Fluidauslass, wobei der Referenzdruck P0 1000 hPa betrage, der Einlassdruck P1 ebenfalls 1000 hPa betrage und der :Auslassdruck P2 700 hPa betrage. In dieser Situation wird der Membran-Klappen-Verbund, der durch den Verbund aus Haltestruktur und Verschlusselement gebildet ist, nach unten gezogen, so dass sich das Verschlusselement von der Dichtlippe abhebt und das Ventil geöffnet ist. Diese Situation entspricht' den Verhältnissen beim Saughub einer Pumpe, wobei ausgehend von der Situation in den Fig. 11a und 11b ein Druckausgleich durch ein Nachströmen von Fluid in den Einlass stattfinden wird.

Wie aus Fig. 11b zu erkennen ist, ist der Hub der Haltestruktur durch den unteren Chip begrenzt, wobei der Hub nie höher sein kann als die Ventilkammerhöhe. Ein solcher mechanischer Anschlag für den Hub der Haltestruktur ist vorteilhaft, da nur reduzierte mechanische Spannungen auf dieselbe einwirken. Jedoch kann das Ventil auch nur maximal bis zu Ventilkammerhöhe geöffnet werden, so dass der Flusswiderstand dadurch beeinflusst werden kann. Die Ventilkammerhöhe ist an sich ein frei wählbarer Parameter, wobei sich jedoch durch eine größere Ventilkammerhöhe das Totkammervolumen erhöht, wenn das Mikroventil als Einlassventil in einer Mikropumpe verwendet wird. Der durch den Anschlag der Haltestruktur an das Verschlusselement bedingte erhöhte Flusswiderstand kann reduziert werden, wenn in dem Versteifungsbereich 390 des Verschlusselements in Fig. 11b ein bzw. mehrere von links nach rechts verlaufende Fluidkanäle vorgesehen werden.

Um beim Vorliegen eines Überdrucks am Fluideinlass ein Durchbiegen der Ventilklappenaufhängung nach oben zu vermeiden, können bei allen Ausführungsformen des erfindungsgemäßen Mikroventils zwischen der auslenkbaren Haltestruktur und dem auslenkbaren Verschlusselement Stützelemente gebildet sein, die im geschlossenen Zustand ein unerwünschtes Durchbiegen des Verschlusselements verhindern. Bezug nehmend auf Fig. 8b können derartige Stützelemente 372 beispielsweise rechts und links vom Stößel 326 im Bereich der membranartigen Aufhängungen 368 in die Unterseite des Membranchips 300 strukturiert sein. Diese Stützelemente 372 können gleichzeitig mit dem Stößel und der Dichtlippe in der Unterseite des Membranchips 300 strukturiert werden und die gleiche Höhe oder eine geringere Höhe wie die Dichtlippe und/oder der Stößel aufweisen. Diese Stützelemente dürfen jedoch nicht fest mit dem Klappenchip 302' verbunden sein. Die Ausgestaltung der Stützelemente kann beliebig sein, wobei dieselben die Form einer durchgehenden Leiste auf jeder Seite des Stößels oder die Form von einzelnen Pfosten aufweisen können.

Im folgenden wird genauer auf das Zusammenwirken der drei Drücke P0, P1 und P2 eingegangen. Der Referenzdruck P0 wird in der Regel der Atmosphärendruck sein, wobei der Referenzdruck aber auch anders gewählt werden kann, wenn der Raum über dem Ventil mit einem definierten Druckreservoir beaufschlagt wird. Das Kraftgleichgewicht gibt folgendes Kriterium für ein Schließen des Ventils:

$$P0 - P1 \cdot \beta < P2 \cdot (1 - \beta)$$

mit dem Flächenverhältnis

$$\beta = Af/Am < 1.$$

Eine Analyse einer Variation des Referenzdrucks P0 ergibt die im folgenden dargelegten Fälle, wobei zu Veranschaulichungszwecken von einem Wert $\beta=0{,}5$ ausgegangen wird.

Liegt ein Referenzdruck P0 von 0 vor, was einem Vakuum außerhalb des Mikroventils entspricht, ergibt sich aus dem obigen Kriterium P2>-P1. Somit ist das Ventil für alle P1 und P2 doppelt geschlossen, was bedeutet, dass das Ventil nicht geöffnet werden kann. Anders ausgedrückt heißt das, dass, wenn der Referenzdruck auf Vakuum gesetzt wird, das Ventil in keinem Fall geöffnet werden kann.

Für 0<P0<0,5·P1 ergibt das obige Kriterium: P2>P0-P1.

Dies bedeutet, dass das Ventil für alle P2 und P1 doppelt geschlossen ist. Auch bei einem Referenzdruck, der kleiner als der halbe Einlassdruck ist, kann somit das Ventil in keinem Fall geöffnet werden.

Für 0,5·P1≤P0≤P1, d. h. P0=$\alpha$·P1, mit 0,5<$\alpha$≤1 ergibt das obige Kriterium: P2>P1·(2$\alpha$-1). Das heißt, dass das Ventil geschlossen bleibt, wenn P2 den Wert P1·(2$\alpha$-1) überschreitet. Das Ventil öffnet nur, wenn ein Unterdruck P2 auftritt, der geringer ist als P1·(2$\alpha$-1). Ist somit der Referenzdruck kleiner als P1 aber größer als 0,5·P1, öffnet das Ventil nur bei einem Unterdruck am Auslass.

Für den Fall, dass der Referenzdruck größer ist als der Einlassdruck, d. h. P0>P1 ergibt das obige Kriterium: P2>2·P0-P1: in diesem Fall muß der Auslassdruck P2 den Einlassdruck P1 übersteigen, um das Ventil zu schließen. Ist somit der Referenzdruck größer als P1 kann das Ventil nur geschlossen gehalten werden, wenn der Auslassdruck P2 den Einlassdruck P1 übersteigt.

Schließlich sei noch der Fall betrachtet, bei dem der Referenzdruck größer als der Einlassdruck und größer als der Auslassdruck ist, d. h. P0>P1 und P0>P2. In diesem Fall gilt P2+P1>2·P0. Diese Ungleichung kann für keine Einlassdrücke und Auslassdrücke erfüllt werden, so dass das Ventil in diesem Fall "doppelt offen" ist. Für einen solchen Referenzdruck kann das Ventil somit nicht geschlossen werden.

Ein Ventil mit gewünschten Eigenschaften kann durch Vorsehen einer Einrichtung zum Einstellen des Referenzdrucks, der von außen auf die Haltestruktur wirkt, geschaffen werden. Eine solche Einrichtung kann beispielsweise durch einen hermetisch abschließenden Deckel, der bei Herstellung des Ventils als Druckreservoir auf die dem Verschlusselement der Haltestruktur abgewandte Seite der Haltestruktur aufgebracht wird, um einen definierten Druck von z.B. 700 hPa zu liefern, realisiert sein. Ferner kann eine Fluidleitung mit der dem Verschlusselement abgewandten Seite der Haltestruktur verbunden sein, so dass über die Fluidleitung ein vorbestimmter Druck auf die Haltestruktur ausübbar ist, um somit eine pneumatische Steuerung für das Mikroventil zu schaffen. Das erfindungsgemäße Mikroventil kann auch als Sicherheitsventil ausgebildet sein, das offen ist, solange ein Referenzdruck von außen auf die Haltestruktur wirkt, und das schließt, sobald ein entsprechender Referenzdruck nicht mehr vorhanden ist, beispielsweise durch Durchstoßen einer Membran oder dergleichen.

Nachdem nunmehr die Druckverhältnisse hinsichtlich des selbstsperrenden Verhaltens des erfindungsgemäßen Mikroventils erläutert wurden, wird nachfolgend Bezug nehmend auf die Fig. 12a bis 12e die Integration eines solchen erfindungsgemäßen Mikroventils als Einlassventil in einer Mikromembranpumpe beschrieben.

Eine solche erfindungsgemäße Mikromembranpumpe umfasst einen Membranchip 400 und einen Klappenchip 402, wie in Fig. 12b gezeigt ist. Die Chips 400 und 402 können aus den gleichen Materialien und mittels der gleichen Verfahren, die oben bezüglich der Chips 300 und 302 angegeben wurden, hergestellt werden.

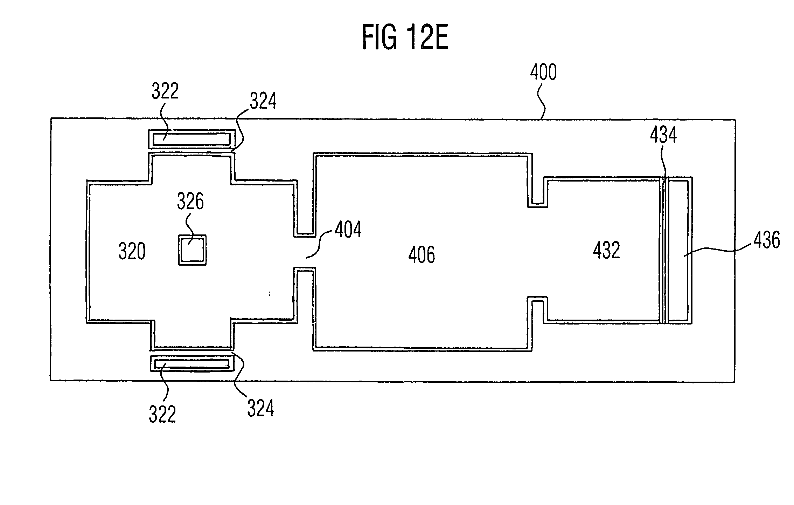

Fig. 12a zeigt eine Draufsicht auf den Membranchip 400, Fig. 12b eine Schnittansicht entlang der Linie S3-S3 von Fig. 12a, Fig. 12c eine Schnittansicht entlang der Linie S4-S4 von Fig. 12a, Fig. 12d eine Schnittansicht entlang der Linie S5-S5 von Fig. 12a und Fig. 12e eine Unteransicht des Membranchips 400.

Im linken Bereich der Mikromembranpumpe ist ein erfindungsgemäßes Mikroventil realisiert, das mit Ausnahme der folgenden Ausnahme beispielsweise dem Bezug nehmend auf die Fig. 8a und 8b beschriebenen Ausführungsbeispiel entspricht. In dem Klappenchip 402 ist bei der in den Fig. 12a bis 12e gezeigten Mikropumpe kein Fluidauslass vorgesehen, sondern vielmehr ist ein Fluidauslass 404 hier in dem Membranchip strukturiert. Der Fluideinlass und das Verschlusselement 340' sind wiederum (vergleichbar mit den Fig. 8a und 8b) über eine Fluidleitung, die in einem Trägerelement vorgesehen sein kann, mit einem Einlassdruck P1 beaufschlagbar.

In der Oberseite des Membranchips 400 ist ferner eine Ausnehmung 410 zum Erzeugen einer Pumpmembran 412 gebildet. Auf der Pumpmembran ist ein Betätigungsglied 414 vorgesehen, beispielsweise in der Form einer Piezokeramik, die zusammen mit der Membran 412 einen Piezobiegewandler definiert. Wie in Fig. 12e zu sehen ist, ist die Unterseite des Membranchips 400 strukturiert, um zusammen mit einer Ausnehmung in der Oberfläche des Klappenchips 402 eine Pumpkammer 406 zu definieren. Die zusätzliche Absenkung der Pumpkammer in die Oberfläche des Klappenchips 402 dient dabei dazu, um ein besseres Kompressionsverhältnis zu erreichen. Zu diesem Zweck kann die Absenkung kreisförmig ausgebildet sein, wie durch die gestrichelte Linie 416 in Fig. 12a angedeutet ist, um an die Auslenkung der Pumpmembran angepasst zu sein, so dass sich eine bestmögliche Verdrängung des Pumpkammervolumens bei Auslenkung der Pumpmembran 412 nach unten ergibt. An dieser Stelle sei angemerkt, dass der gestrichelte Kreis in Fig. 12a lediglich veranschaulichend im Sinne eines Durchscheinbildes dargestellt ist, da derselbe an sich Teil des Klappenchips 402 ist.

Am Auslass der Mikromembranpumpe ist ein Rückschlagventil 430 vorgesehen. Wie das Einlassventil und der Pumpkammerbereich ist auch das Rückschlagventil 430 am Auslass durch entsprechende Strukturierungen des Membranchips 400 und des Klappenchips 402 gebildet. Dazu ist in der Unterseite des Membranchips 400 eine Ventilkammer 432 gebildet, die mit der Pumpkammer 406 fluidmäßig verbunden ist. Die Ventilkammer 432 ist von einem Auslassbereich 436, der ebenfalls in der Unterseite des Membranchips 400 strukturiert ist, durch eine Dichtlippe 434 getrennt. In dem Klappenchip 402 ist eine Ventilklappe 437 strukturiert. Bei dem gezeigten Ausführungsbeispiel handelt es sich bei der Ventilklappe 437 um eine dreiseitig eingespannte Ventilklappe, die auf drei Seiten derselben durch membranartige Strukturen 438, 440 und 442 eingespannt ist. An einer vierten Seite ist die Ventilklappe 437, die, wie in den Fig. 12b und 12d zu sehen ist, einen Versteifungsbereich 444 aufweist, nicht eingespannt sondern grenzt an einen Auslass 446 der Mikromembranpumpe. Bei einem Überdruck in der Pumpkammer 406 und somit der Ventilkammer 432 hebt sich die Ventilklappe 436 von der Dichtlippe 434 ab, so dass ein Fluidfluss aus der Pumpkammer zu dem Auslass 446 erfolgen kann. Umgekehrt wirkt das Ventil 430 bei einem Druck P3, d.h. bei einem Überdruck, am Auslass 446 sperrend.

Wie in Fig. 12d gezeigt ist, wirkt der Druck P3 am Auslass auf die Ventilklappe des dort dargestellten Rückschlagventils. Es ist klar, dass zu diesem Zweck die Mikropumpe entsprechend auf ein Trägerelement aufgebracht sein kann, das eine Auslassfluidleitung besitzt, die an dem Auslass 446 und dem Rückschlagventil 430 mündet, so dass der Druck P3 wie oben angegeben wirkt.

Alternativ zu dem beschriebenen Rückschlagventil 430 könnte das Auslassventil der erfindungsgemäßen Mikromembranpumpe auch durch ein herkömmliches Rückschlagventil verwendet werden, wie es oben Bezug nehmend auf die Fig. 1a bis 1c beschrieben wurde.

Bei der oben Bezug nehmend auf die Fig. 12a bis 12e beschriebenen Mikropumpe ist das doppelt selbstsperrende erfindungsgemäße Mikroventil am Einlass wirksam, um bei Vorliegen eines Überdrucks in der Pumpkammer 406, die mit dem Fluidauslass 404 des Mikroventils fluidmäßig verbunden ist, einen Rückfluss durch die Einlassöffnungen im wesentlichen zu verhindern.

Bezug nehmend auf die Figuren wurden oben bevorzugte Ausführungsbeispiele der vorliegenden Erfindung näher erläutert. Es ist für Fachleute klar, dass zahlreiche Modifikationen hinsichtlich der beschriebenen Ausführungsbeispiele existieren. Insbesondere könnten Strukturierungen, die bei den obigen Ausführungsbeispielen jeweils in einer Oberfläche von einem der Chips gebildet sind, auch durch Strukturierungen in beiden Oberflächen dieses Chips bzw. in der mit dem Chip verbundenen Oberfläche des anderen Chips gebildet sein, um die entsprechende Funktionalität zu erhalten. Darüber hinaus müssen, wie bereits oben erwähnt wurde, die jeweiligen Ausnehmungen nicht die dargestellte abgeschrägte Form aufweisen, die typisch für eine Strukturierung von Siliziumsubstraten unter Verwendung eines KOH-Ätzens ist. Vielmehr können die jeweiligen Strukturen andere Formen aufweisen, insbesondere wenn das erfindungsgemäße Mikroventil bzw. die erfindungsgemäße Mikromembranpumpe durch andere Materialien als Silizium implementiert werden, beispielsweise Kunststoffe oder Metalle.

## Patentansprüche

1. Normal geschlossenes Mikroventil mit folgenden Merkmalen:

    einem Fluideinlass (330);
    einem Fluidauslass (332);
    einem auslenkbaren Verschlusselement (340; 340'), das im geschlossenen Zustand des Mikroventils auf einer Dichtlippe (324) aufliegt, so dass der Fluideinlass (330) von dem Fluidauslass (332) fluidmäßig getrennt ist, und im geöffneten Zustand des Mikroventils von der Dichtlippe (324) beabstandet ist; und
    einer auslenkbaren Haltestruktur (310; 360), die mit dem Verschlusselement (340; 340') derart verbunden ist, dass zwischen denselben ein mit dem Fluidauslass (332) fluidmäßig verbundener Zwischenraum (320) existiert, wobei eine Krafteinwirkung auf die Haltestruktur und das Verschlusselement in einer ersten Richtung öffnend wirkt und eine Krafteinwirkung auf die Haltestruktur und das Verschlusselement in einer zweiten Richtung schließend wirkt,
    wobei der Fluideinlass (330) und das Verschlusselement (340; 340') derart angeordnet sind, dass ein Druck am Fluideinlass (330) eine Kraft in die zweite Richtung ausübt, **dadurch gekennzeichnet**
    **dass** eine wirksame Fläche der Haltestruktur (310; 360), die bei Anliegen eines Drucks am Fluidauslass (332) eine Kraft in der zweiten Richtung bewirkt, größer ist als eine wirksame Fläche des Verschlusselements (340; 340'), die bei Anliegen eines Drucks am Fluidauslass (332) eine Kraft in der ersten Richtung bewirkt, und
    **dass** die auslenkbare Haltestruktur (310; 360) eine versteifte Membranstruktur aufweist.

2. Mikroventil nach Anspruch 1, bei dem das auslenkbare Verschlusselement (340, 340') eine versteifte oder nicht versteifte Membranstruktur aufweist.

3. Mikroventil nach Anspruch 2, bei der die Haltestruktur (310; 360) eine umlaufend eingespannte, versteifte Membranstruktur ist, und bei der das Verschlusselement (340; 340') eine zweiseitig eingespannte versteifte oder nicht versteifte Membranstruktur ist.

4. Mikroventil nach Anspruch 3, das zwei Fluideinlässe (330) an den nicht eingespannten Seiten des Verschlusselements (340, 340') und eine Dichtlippe (324) für jeden der Fluideinlässe (330) aufweist.

5. Mikroventil nach Anspruch 4, das einen Fluidauslass (332) auf einer oder beiden eingespannten Seiten des Verschlusselements (340, 340') aufweist.

6. Mikroventil nach einem der Ansprüche 2 bis 5, bei dem die versteifte Membranstruktur der Haltestruktur (310; 360) flächenmäßig größer ist als die versteifte oder nicht versteifte Membranstruktur des Verschlusselements (340; 340').

7. Mikroventil nach einem der Ansprüche 1 bis 6, bei dem die Haltestruktur (310; 360) und das Verschlusselement (340; 340') durch ein Verbindungsstück (326) verbunden sind, das einen zentralen Bereich der Haltestruktur (310; 360) mit einem zentralen Bereich des Verschlusselements (340, 340') verbindet.

8. Mikroventil nach Anspruch 7, bei dem die Haltestruktur (310; 360) in einer ersten Schicht (300; 300'; 400) gebildet ist und das Verschlusselement (340; 340') in einer zweiten Schicht (302; 302'; 402) gebildet ist, wobei ferner der Fluideinlass (330), der Fluidauslass (332; 404), die Dichtlippe (324), der Zwischenraum (320) und das Verbindungsstück (326) in diesen beiden Schichten strukturiert sind, wobei die Schichten an jeweiligen ersten Oberflächen derselben verbunden sind.

9. Mikroventil nach Anspruch 8, bei dem die Dichtlippe (324), der Zwischenraum (320) und das Verbindungsstück (326) in der ersten Oberfläche der ersten Schicht (300; 300'; 400) strukturiert sind und der Fluideinlass (330) und der Fluidauslass (332) in der zweiten Schicht strukturiert sind.

10. Mikroventil nach einem der Ansprüche 1 bis 9, bei dem zwischen der auslenkbaren Haltestruktur (310; 360) und dem auslenkbaren Verschlusselement (340; 340') Stützelemente gebildet sind, die in dem geschlossenen Zustand ein unerwünschtes Durchbiegen des Verschlusselements (340; 340') verhindern.

11. Mikroventil nach einem der Ansprüche 1 bis 10, bei dem die Haltestruktur (310; 360) und das Verschlusselement (340; 340') ausgebildet sind, um durch jeweils herrschende Drücke ausgelenkt zu werden, wobei keine aktive Betätigungseinrichtung für die Haltestruktur oder das Verschlusselement vorgesehen ist.

12. Mikroventil nach einem der Ansprüche 1 bis 11, bei dem ein auf die Haltestruktur wirkender Referenzdruck bei Anliegen eines am Fluidauslass wirkenden Drucks, der im Vergleich zu dem Referenzdruck einen Unterdruck darstellt, öffnend wirkt.

13. Mikroventil nach einem der Ansprüche 1 bis 12, mit einer Einrichtung zum Einstellen eines auf die Haltestruktur wirkenden Referenzdrucks.

14. Mikropumpe mit einem Mikroventil nach einem der Ansprüche 1 bis 13 als Einlassventil.

15. Mikropumpe nach Anspruch 14, die als Auslassventil ein passives Rückschlagventil aufweist.

16. Mikropumpe nach Anspruch 14, bei der das Einlassventil und Pumpenstrukturen der Mikropumpe in zwei Schichten (400, 402) strukturiert sind.

17. Mikropumpe nach Anspruch 15, bei der das Einlassventil, Pumpenstrukturen der Mikropumpe und das Auslassventil in zwei Schichten (400, 402) strukturiert sind.

**Claims**

1. Normally closed microvalve, comprising:

   a fluid inlet (330);
   a fluid outlet (332);
   a deflectable closing element (340; 340'), which, in the closed state of the microvalve, is seated on a sealing lip (324), such that the fluid inlet (330) is fluidically disconnected from the fluid outlet (332), and, in the opened state of the microvalve, is spaced apart from the sealing lip (324); and
   a deflectable holding structure (310; 306), which is connected to the closing element (340; 340'), such that, between the same, a space (320) exists, which is in fluidic communication to the fluid outlet (332),
   wherein an influence of force onto the holding structure and the closing element in a first direction provides an opening action, and an influence of force onto the holding structure and the closing element in a second direction provides a closing action,
   with the fluid inlet (330) and the closing element (340; 340') being arranged such that a pressure at the fluid inlet (330) exerts a force into the second direction, **characterized in**
   with an effective area of the holding structure (310; 360), which, when a pressure is applied to the fluid outlet (332), exerts a force into the second direction, is greater than an effective area of the closing element (340; 340'), which, when a pressure is applied to the fluid outlet (332), causes a force in the first direction, and
   that the deflectable holding structure (310; 360) comprises a stiffened diaphragm structure.

2. Microvalve in accordance with claim 1, wherein the deflectable closing element (340, 340') comprises a stiffened or non-stiffened diaphragm structure.

3. Microvalve in accordance with claim 2, wherein the holding structure (310; 360) is a circumferentially fixed, stiffened diaphragm structure, and wherein the closing element (340; 340') is a stiffened or non-stiffened diaphragm structure fixed at two sides thereof.

4. Microvalve in accordance with claim 3, comprising two fluid inlets (330) at the non-fixed sides of the closing element (340, 340') and a sealing lip (324) for each of the fluid inlets (330).

5. Microvalve in accordance with claim 4, comprising a fluid outlet (332) on one or both fixed sides of the closing element (340, 340').

6. Microvalve in accordance with one of claims 2 to 5, wherein the stiffened diaphragm structure of the holding structure (310; 360) comprises a greater area than the stiffened or non-stiffened diaphragm structure of the closing element (340; 340').

7. Microvalve in accordance with one of claims 1 to 6, wherein the holding structure (310; 360) and the closing element (340; 340') are connected by means of a connection piece (326), which connects a central area of the holding structure (310; 360) to a central area of the closing element (340, 340').

8. Microvalve in accordance with claim 7, wherein the holding structure (310; 360) is formed in a first layer (300; 300'; 400) and the closing element (340; 340') is formed in a second layer (302; 302'; 402), with the fluid inlet (330), the fluid outlet (332; 404), the sealing lip (324), the space (320) and the connection piece (326) are further structured in these two layers with the layers being connected at respective first surfaces of the same.

9. Microvalve in accordance with claim 8, wherein the sealing lip (324), the space (320) and the connection piece (326) are structured in the first surface of the first layer (300; 300'; 400) and the fluid inlet (330) and the fluid outlet (332) are structured in the second layer.

10. Microvalve in accordance with one of claims 1 to 9, wherein, between the deflectable holding structure (310; 360) and the deflectable closing element (340; 340') support elements are formed, which, in the closed state, prevent an undesired bending of the closing element (340; 340').

11. Microvalve in accordance with one of claims 1 to 10, wherein the holding structure (310; 360) and the closing element (340; 340') are formed to be deflected by the respectively prevailing pressures, with no active actuation means for the holding structure or the closing element being provided.

12. Microvalve in accordance with one of claims 1 to 11, wherein a reference pressure acting on the holding structure provides an opening action, when a pressure is applied to the fluid outlet, which, as compared to the reference pressure, represents a negative pressure.

13. Microvalve in accordance with one of claims 1 to 12, having a means for adjusting a reference pressure acting onto the holding structure.

14. Micropump with a microvalve in accordance with one of claims 1 to 13 as an inlet valve.

15. Micropump in accordance with claim 14, which, as an outlet valve, comprises a passive non-return valve.

16. Micropump in accordance with claim 14, wherein the inlet valve and the pump structures of the micropump are structured in two layers (400, 402).

17. Micropump in accordance with claim 15, wherein the inlet valve, pump structures of the micropump and the outlet valve are structured in two layers (400, 402).

**Revendications**

1. Microsoupape normalement fermée, aux caractéristiques suivantes :

   une entrée de fluide (330) ;
   une sortie de fluide (332) ;

un élément d'obturation déformable (340 ; 340') qui, à l'état fermé de la microsoupape, s'appuie sur une lèvre d'étanchéité (324), de sorte que l'entrée de fluide (330) soit séparée en fluide de la sortie de fluide (332), et qui, à l'état ouvert de la microsoupape, est distant de la lèvre d'étanchéité (324) ; et

une structure de retenue déformable (310, 360) qui est reliée à l'élément d'obturation (340 ; 340') de sorte qu'entre eux existe un espace intermédiaire (320) relié en fluide à la sortie de fluide (332),

une action de force ayant un effet d'ouverture sur la structure de retenue et l'élément d'obturation dans une première direction et une action de force ayant un effet de fermeture sur la structure de retenue et l'élément d'obturation dans une deuxième direction,

l'entrée de fluide (330) et l'élément d'obturation (340 ; 340') étant disposés de sorte qu'une pression à l'entrée de fluide (330) exerce une force dans la deuxième direction, **caractérisée par le fait**

**qu'**une surface active de la structure de retenue (310 ; 360) qui, lors de l'application d'une pression à la sortie de fluide (332) crée une force dans la deuxième direction, est plus grande qu'une surface active de l'élément d'obturation (340 ; 340') qui, lors de l'application d'une pression à la sortie de fluide (332), crée une force dans la première direction, et

**que** la structure de retenue déformable (310 ; 360) présente une structure de membrane rigidifiée.

2. Microsoupape selon la revendication 1, dans laquelle l'élément d'obturation déformable (340 ; 340') présente une structure de membrane rigidifiée ou non rigidifiée.

3. Microsoupape selon la revendication 2, dans laquelle la structure de retenue (310 ; 360) est une structure de membrane rigidifiée fixée sur le pourtour, et dans laquelle l'élément d'obturation déformable (340 ; 340') est une structure de membrane rigidifiée ou non rigidifiée fixée de deux côtés.

4. Microsoupape selon la revendication 3, qui présente deux entrées de fluide (330) des côtés de l'élément d'obturation (340, 340') non fixés et une lèvre d'étanchéité (324) pour chacune des entrées de fluide (330).

5. Microsoupape selon la revendication 4, qui présente une sortie de fluide (332) de l'un ou des deux côtés fixés de l'élément d'obturation (340, 340').

6. Microsoupape selon l'une des revendications 2 à 5, dans laquelle la structure de membrane rigidifiée de la structure de retenue (310 ; 360) est, en surface, plus grande que la structure de membrane rigidifiée ou non rigidifiée de l'élément d'obturation (340 ; 340').

7. Microsoupape selon l'une des revendications 1 à 6, dans laquelle la structure de retenue (310 ; 360) et l'élément d'obturation (340 ; 340') sont reliés par une entretoise (326) qui relie une zone centrale de la structure de retenue (310 ; 360) à une zone centrale de l'élément d'obturation (340, 340').

8. Microsoupape selon la revendication 1, dans laquelle la structure de retenue (310 ; 360) est formée dans une première couche (300 ; 300' ; 400) et l'élément d'obturation (340 ; 340') est formé dans une deuxième couche (302 ; 302' ; 402), l'entrée de fluide (330), la sortie de fluide (332 ; 404), la lèvre d'étanchéité (324), l'espace intermédiaire (320) et l'entretoise (326) étant, par ailleurs, formés dans ces deux couches, les couches étant assemblées à des premières surfaces respectives de celles-ci.

9. Microsoupape selon la revendication 8, dans laquelle la lèvre d'étanchéité (324), l'espace intermédiaire (320) et l'entretoise (326) sont structurés dans la première surface de la première couche (300 ; 300' ; 400) et l'entrée de fluide (330) et la sortie de fluide (332) sont structurées dans la deuxième couche.

10. Microsoupape selon l'une des revendications 1 à 9, dans laquelle sont formés, entre la structure de retenue déformable (310 ; 360) et l'élément d'obturation déformable (340 ; 340'), des éléments de support qui empêchent, à l'état fermé, une flexion non désirée de l'élément d'obturation déformable (340 ; 340').

11. Microsoupape selon l'une des revendications 1 à 10, dans laquelle la structure de retenue (310 ; 360) et l'élément d'obturation (340 ; 340') sont réalisés de manière à être déformés par des pressions régnant dans chaque cas, aucun dispositif d'actionnement actif n'étant prévu pour la structure de retenue ou l'élément d'obturation.

12. Microsoupape selon l'une des revendications 1 à 11, dans laquelle une pression de référence agissant sur la structure de retenue ayant, en cas de présence d'une pression agissant à la sortie de fluide et qui représente, comparée à la pression de référence, une dépression, un effet d'ouverture.

13. Microsoupape selon l'une des revendications 1 à 12, avec un dispositif de réglage d'une pression de référence agissant sur la structure de retenue.

14. Micropompe avec une microsoupape selon l'une des revendications 1 à 13 comme soupape d'entrée.

15. Micropompe selon la revendication 14, qui présente, comme soupape de sortie, un clapet de retenue passif.

16. Micropompe selon la revendication 14, dans laquelle la soupape d'entrée et les structures de pompe de la micropompe sont structurées dans deux couches (400, 402).

17. Micropompe selon la revendication 15, dans laquelle la soupape d'entrée, les structures de pompe de la micropompe et la soupape de sortie sont structurés dans deux couches (400, 402).

FIG 1A
(STAND DER TECHNIK)

FIG 1B
(STAND DER TECHNIK)

FIG 1C
(STAND DER TECHNIK)

## FIG 2 (STAND DER TECHNIK)

EP 1 576 294 B1

## FIG 3 (STAND DER TECHNIK)

## FIG 4A
### (STAND DER TECHNIK)

100

120

112   116

X

X

110

## FIG 4B
### (STAND DER TECHNIK)

104   110   112   114   106

100

102

108   116   120   150

130   140

## FIG 4C
### (STAND DER TECHNIK)

112   114

100

102

116   150   152   120

130

## FIG 4D
### (STAND DER TECHNIK)

102

150

142

132

FIG 5

208    202    P0    Am    210

206    K2    P2    206

212

K1    204

200    P1    Af

EP 1 576 294 B1

FIG 6

## FIG 6A

310

316

S2-S2  322  312  314

312  314

322

300

302

330  324  320

326

324  330

340

## FIG 6D

310

S1-S1  312  314

316  326  312  314  320

300

302

332  352  342  344  342  344  352  332

346

340

# FIG 6B

## FIG 6C

# FIG 6E

# FIG 6F

## FIG 7A

## FIG 7B

## FIG 8A

## FIG 8B

FIG 9A

PO=1000hPA    P2=1000hPA

P1=1.300hPA

FIG 9B

P1        P2

FIG 10A

PO=1000hPA    P2=1300hPA

P1=1000hPA

FIG 10B

P1        P2

FIG 11A

P0=1000hPA

P2=700hPA

P1=1000hPA

FIG 11B

P1

P2

390

FIG 12A

FIG 12B

FIG 12C    FIG 12D

# FIG 12E

EP 1 576 294 B1